# FASCICULE DE BREVET EUROPEEN

(11) **EP 1 627 458 B1**
(45) Date de publication et mention de la délivrance du brevet: **16.03.2011**
(21) Numéro de dépôt: 04767178.9
(22) Date de dépôt: 26.05.2004
(51) Int. Cl.: H02K 9/20

(54) **MACHINE ELECTRIQUE TOURNANTE, TELLE QU'UN ALTERNATEUR, NOTAMMENT POUR VEHICULE AUTOMOBILE**
ELEKTRISCHE DREHMASCHINE, ZUM BEISPIEL EINE LICHTMASCHINE, INSBESONDERE FÜR EIN AUTOMOBIL
ROTATING ELECTRICAL MACHINE, SUCH AS AN ALTERNATOR, PARTICULARLY FOR AN AUTOMOBILE

(30) Priorité: 26.05.2003 FR 0306346
(43) Date de publication de la demande: 22.02.2006
(73) Titulaire: VALEO EQUIPEMENTS ELECTRIQUES MOTEUR, 94017 Créteil Cedex (FR)
(72) Inventeur: VASILESCU, Claudiu, F-75020 Paris (FR); FAKES, Michel, F-59113 Seclin (FR)
(74) Mandataire: Gamonal, Didier
(86) Numéro de dépôt international: PCT/FR2004/001300
(87) Numéro de publication internationale: WO 2004/107535

(56) Documents cités:
- US-A- 4 295 067
- US-A- 4 406 959
- US-B1- 6 307 289
- US-B2- 6 359 352
- PATENT ABSTRACTS OF JAPAN vol. 0081, no. 19 (E-248), 5 juin 1984 (1984-06-05) -& JP 59 032339 A (FUJI DENKI SEIZO KK), 21 février 1984 (1984-02-21)
- PATENT ABSTRACTS OF JAPAN vol. 0080, no. 95 (E-242), 2 mai 1984 (1984-05-02) -& JP 59 014339 A (HITACHI SEISAKUSHO KK), 25 janvier 1984 (1984-01-25)

## Description

### Domaine de l'invention

L'invention concerne une machine électrique tournante, telle qu'un alternateur ou un alterno-démarreur notamment pour véhicule automobile, du type comprenant, à l'intérieur d'un carter pourvu d'un palier avant et d'un palier arrière, un stator porteur d'au moins un bobinage de stator, un rotor monté rotatif à l'intérieur du stator à l'aide d'un arbre supporté dans lesdits paliers avant et arrière, un dispositif de redressement du courant engendré dans le bobinage du stator, ainsi que des moyens de refroidissement et d'évacuation vers l'extérieur de la chaleur produite dans la machine.

### Etat de la technique

Dans le domaine des machines électriques tournantes de ce type, on s'est particulièrement efforcés de trouver des solutions pour l'évacuation de la chaleur dissipée dans le dispositif de redressement. Ainsi il est connu, par exemple par le document EP A 0515 259 (US A 5 270 605), d'assurer le refroidissement des éléments dissipant de la chaleur dans le dispositif redresseur par convection forcée par l'intermédiaire de l'écoulement forcé d'un fluide de refroidissement, dans ce cas de l'air, aspiré par au moins un ventilateur, solidaire en rotation du rotor doté d'au moins un bobinage de rotor, à travers d'ouvertures dans le capot de protection associé au palier arrière. Pour améliorer l'effet de refroidissement, il est connu de prévoir sur le plateau du redresseur sur lequel se trouvent les organes redresseurs des éléments dissipateurs en forme d'ailettes. L'air aspiré après avoir "léché" les éléments dissipateurs passe à travers des ouvertures pratiquées dans le palier arrière de la machine puis ressort par des ouïes radiales de refoulement du palier arrière réalisées à la périphérie externe du palier et donc du carter.

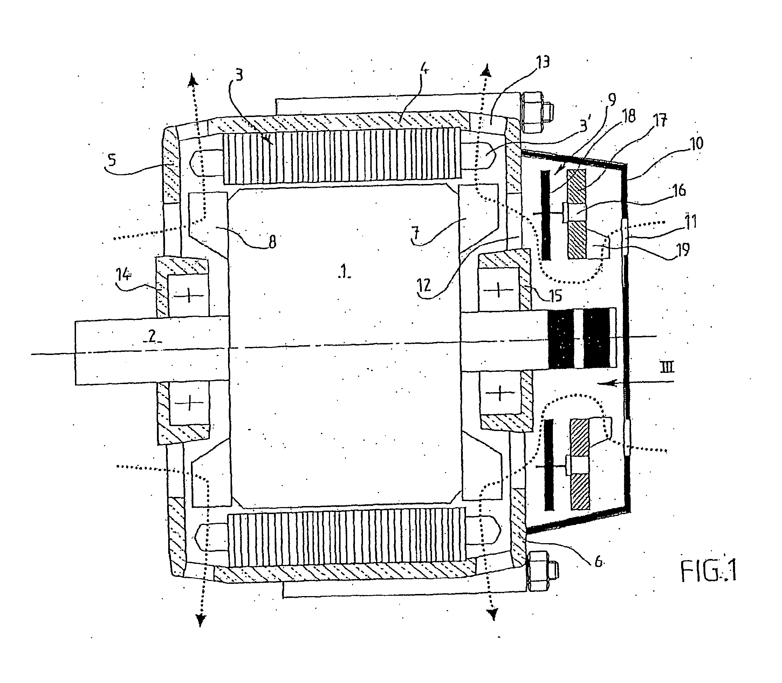

La figure 1 représente schématiquement un alternateur équipé d'un tel dispositif de refroidissement ici à ventilation interne. Sur cette figure le rotor est désigné par la référence 1, l'arbre sur lequel il est monté et centré par la référence 2, le stator par la référence 3, le bobinage du stator par la référence 3', le carter par la référence générale 4, les partis du carter 4 formant des paliers avant et arrière respectivement par les références 5 et 6, un ventilateur arrière fixé sur le rotor par la référence 7, un ventilateur avant également fixé sur le rotor par la référence 8, le dispositif ou pont redresseur par la référence générale 9, les ouvertures axiales d'aspiration d'air de refroidissement dans le capot de protection, portant la référence 10, par la référence 11. Les ouvertures axiales d'aspiration prévues dans le palier arrière 6 sont désignées par la référence 12 et les ouïes radiales de refoulement de l'air de refroidissement, hors de la machine, par la référence 13. La figure représente encore en 14 et 15 les roulements avant et arrière via lesquels les paliers avant et arrière 5 et 6 supportent à rotation centralement l'arbre rotor 2.

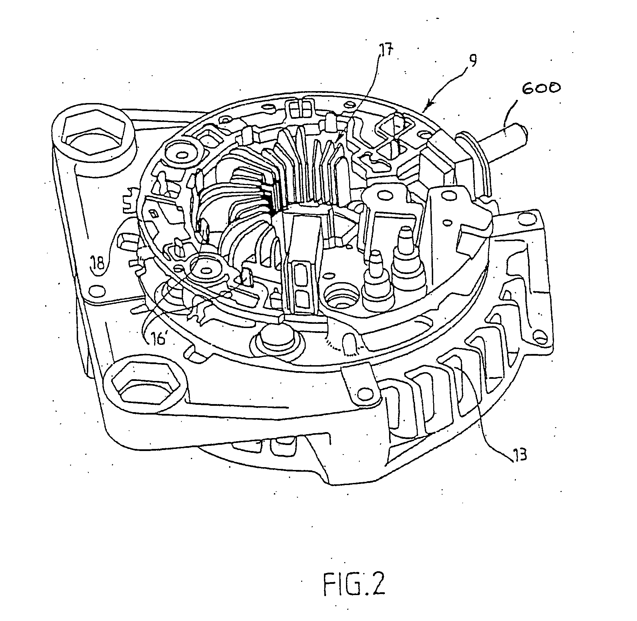

Ces paliers 5, 6 sont de forme creuse et comportent une partie globalement d'orientation transversale par rapport à l'axe de l'arbre 2, dans laquelle sont ménagées les ouvertures axiales 12. Cette partie transversale est prolongée à sa périphérie externe par une partie périphérique, globalement d'orientation axiale par rapport à l'axe de l'arbre 2. C'est dans cette partie que sont ménagées les ouïes 13, axialement de forme oblongue (figure 2).

Le stator 3 est porté intérieurement par la périphérie interne des paliers 5,6.

Pour mémoire on rappellera, lorsque la machine électrique tournante est un alternateur polyphasé, que le stator porte plusieurs bobinages de stator 3' constituant des bobinage d'induit dont les sorties sont reliées au dispositif ou pont redresseur 9 pour redresser le courant alternatif engendré dans ces bobinages, appelées également enroulements de phase, tandis que le rotor porte au moins un bobinage d'excitation. Par exemple le rotor est un rotor à griffes comme décrit dans le document EP A 0 515 259 précité, le bobinage d'excitation étant, de manière connue, disposé entre les flasques des roues polaires. Les extrémités de ce bobinage sont reliées par des liaisons filaires à des bagues collectrices sur lesquelles viennent frotter des balais situés dans un porte-balais visible dans le document EP A 0 515 259. Les balais sont reliés à un régulateur de tension.

Le bobinage du stator de l'alternateur est donc un bobinage d'induit, tandis que le bobinage du rotor est un bobinage inducteur, tel qu'un bobinage d'excitation. L'alternateur est en variante du type monophasé à un seul bobinage d'induit.

En variante l'alternateur est réversible et constitue un alterno-démarreur comme décrit dans le document FR A 2 745 445 (US A 6 002 219) auquel on se reportera. Dans ce cas lors du fonctionnement en mode démarreur le bobinage du stator est un bobinage inducteur et le bobinage du rotor un bobinage induit.

Concernant le dispositif ou pont redresseur 9, les références 16, 17 et 18 désignent respectivement des diodes positives de redressement du courant alternatif engendré dans les bobinages du stator, un plateau dissipateur sur lequel sont montées ces diodes et un connecteur destiné à relier électriquement les diodes 16, sachant que des diodes négatives (non visibles) sont portées par le palier arrière 6 et reliées au connecteur 18. Le dissipateur 17 est pourvu d'ailettes qui sont indiquées en 19. Les lignes fléchées en traits interrompus symbolisent l'écoulement d'air de refroidissement. On constate notamment que l'écoulement d'air de refroidissement de la partie arrière de la machine passe à travers les ouvertures axiales 11 du capot de protection 10, vient en contact des ailettes 19, passe à travers les ouvertures axiales 12 du palier arrière 6 et sort à travers les ouïes radiales 13 du palier arrière après être passé sur le ventilateur arrière 7 et à travers le bobinage de stator 3', plus précisément à travers le chignon arrière du bobinage 3' porté par le corps (non référencé) en forme de paquet de tôles, que comporte le stator 3. Les ventilateurs 7, 8 sont à la figure 1 du type centrifuge.

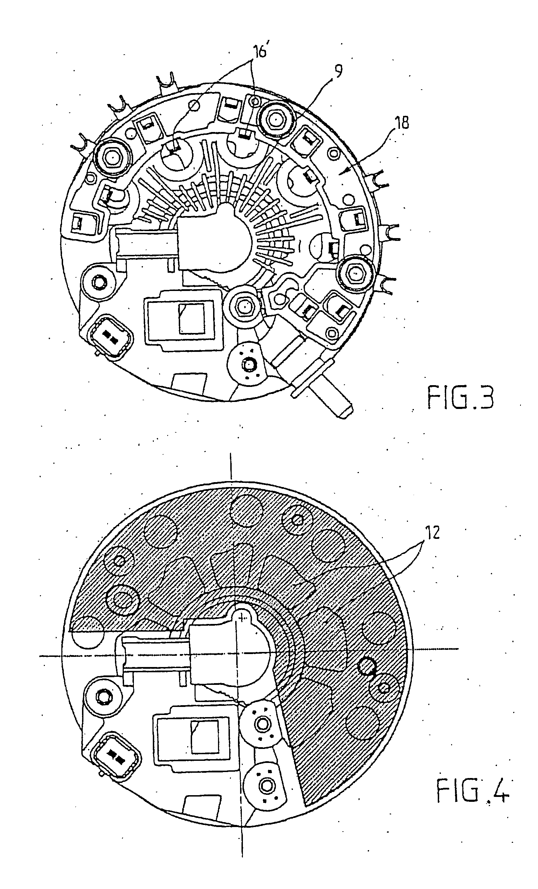

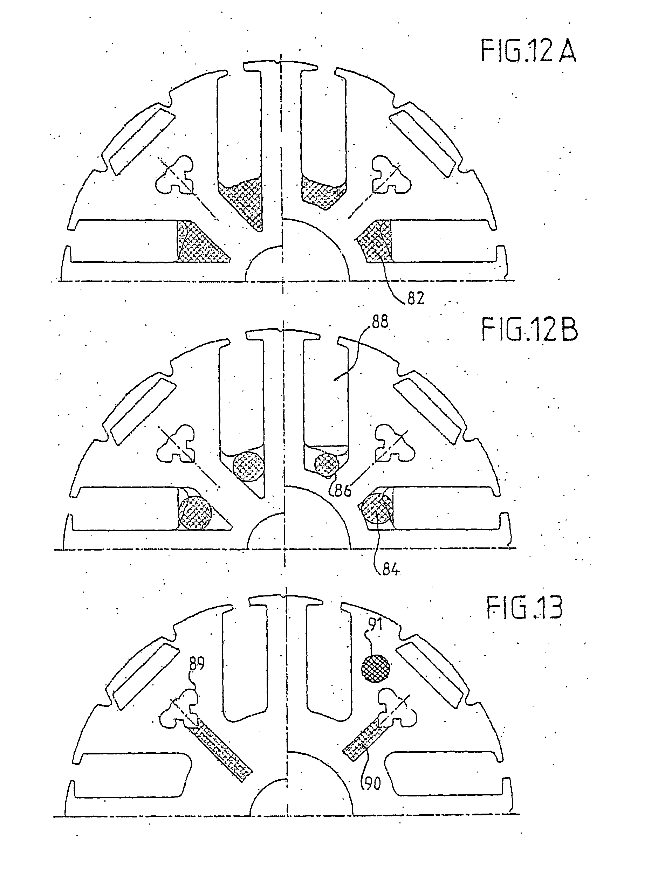

La figure 1 montre le pont redresseur 9 d'une façon schématique. La figure 2 est une vue en perspective d'une réalisation concrète d'un pont redresseur fixé sur le palier arrière d'une machine électrique tournante et la figure 3 est une vue en direction de la flèche III selon la figure 1 d'une version de réalisation semblable d'un pont redresseur complet. La figure 4 montre le pont de la figure 3 sans le dissipateur et sans le connecteur. Les figures 3 à 4 montrent la disposition du dissipateur porteur des diodes positives et l'implantation des ailettes de refroidissement par rapport aux ouvertures axiales 12 du palier 6. Dans les modes de réalisation selon les figures 2 à 4, les diodes négatives sont directement emmanchées dans le palier arrière et le connecteur 18 se trouve à la périphérie du pont au-dessus du dissipateur porteur des diodes positives dont seulement les connections des queues sont visibles et indiquées par la référence 16'. Pour plus de précisions on se reportera par exemple à la figure 13 du document FR A 2 827 436 identique à la figure 2, dans laquelle le porte-balais n'est pas référencé.

Il ressort des figures 2 à 4, que le pouvoir de refroidissement d'un dispositif dissipateur à ailettes, selon l'état de la technique tel que représenté, ne peut être aussi élevé que souhaité dans la mesure où le dissipateur et les ailettes de refroidissement, en raison de leur conception très compacte, opposent à l'écoulement d'air de refroidissement une résistance aéraulique. De ce fait, les éléments dissipant la chaleur, c'est-à-dire les diodes positives 16 et négatives, doivent pouvoir résister à des températures relativement élevées, ce qui oblige à utiliser des éléments dissipants d'un coût important.

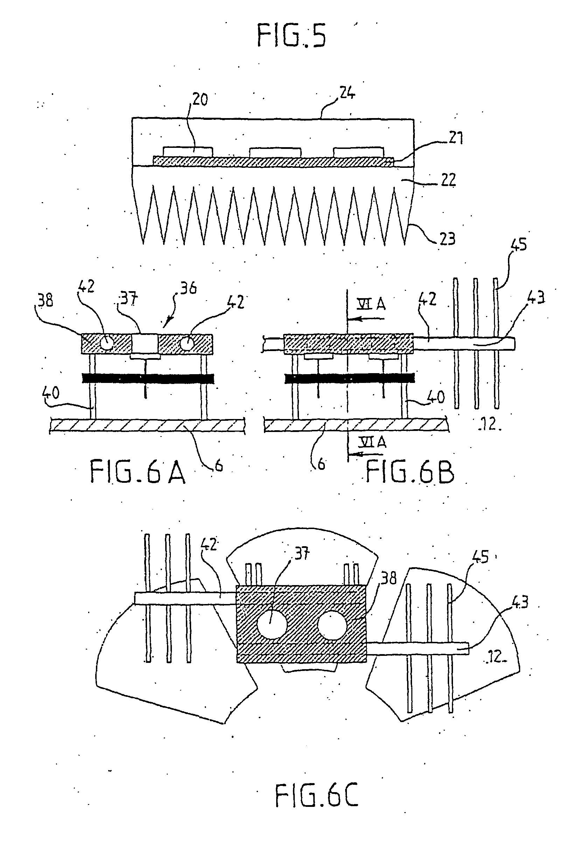

La figure 5 représente une vue en coupe d'un module électronique redresseur externe à un alternateur ou à un alternateur-démarreur appelé alterno-démarreur, selon l'état de la technique. Les éléments électronique de redressement et dissipateurs de chaleur désignés par la référence 20 sont du type de transistor MOS comme décrit par exemple dans le document FR A 2 745 445. Ils dissipent une puissance moyenne qu'il faut refroidir. Ces éléments sont à cette fin portés par un substrat 21 doté de traces métalliques pour assurer les liaisons électriques entre les composants électroniques. Ce substrat transmet la chaleur à un support mécanique dissipateur 22 tout en assurant des isolations électriques. Ce support est thermiquement et électriquement conducteur et est pourvu d'ailettes de dissipation 23. Les éléments électroniques et le substrat sont enfermés dans le capot 24.

Dans cette solution qui est réservée aux ponts redresseurs dissipants ayant une moyenne ou faible puissance, le refroidissement se fait en général par convection naturelle. Les performances de refroidissement sont alors limitées par les contraintes de fabrication qui ne permettent pas la mise en place d'ailettes suffisamment fines pour augmenter les surfaces d'échange. Ainsi un surdimensionnement de l'électronique est souvent nécessaire pour supporter les contraintes thermiques, ce qui rend cette solution relativement coûteuse.

Il est également connu de prévoir les ailettes de refroidissement sur le palier arrière lui-même qui alors refroidit l'embase supportant le sous-ensemble électronique. Cette solution présente l'inconvénient de pouvoir occasionne un mauvais refroidissement du sous-ensemble électronique si l'embase est mal plaquée sur le palier.

Encore une autre solution de l'état de la technique consiste à assurer l'évacuation de la chaleur par circulation d'un liquide de refroidissement dans le support de l'électronique de puissance ou d'assurer le refroidissement de la machine complète en prévoyant une poche d'eau englobant la quasi totalité de la surface de la machine.

Cette solution présente l'inconvénient majeur de rendre les machines complexes, encombrantes et coûteuses.

Dans le document US A 4 295 067 , conforme au préambule de la revendication 1 les moyens de refroidissement et d'évacuation de chaleur comportent au moins un dispositif comprenant un fluide caloporteur susceptible d'absorber de la chaleur de l'environnement, par un premier changement d'état, et de restituer à l'environnement la chaleur, lors d'un autre changement d'état, et une voie de circulation de ce fluide entre une zone de production de la chaleur et une zone d'évacuation de la chaleur.

Le dispositif de refroidissement et d'évacuation précité est réalisé sous forme d'un caloduc qui comporte une enceinte fermée dans laquelle circule le fluide caloporteur, le caloduc comprenant une zone d'absorption de la chaleur par évaporation du fluide et une zone de restitution de la chaleur absorbée par condensation du fluide.

Dans les figures 9 à 14 de ce document US A 4 295 067 l'alternateur comporte un dispositif redresseur, pourvu d'éléments électroniques redresseurs du courant engendré dans le ou les bobinage (s) du stator, qui sont montés sur des moyens de support en un matériau thermiquement conducteur, cet alternateur comprend au moins un caloduc s'étendant entre la zone d'implantation d'un - élément électronique redresseur pour pouvoir absorber la chaleur produite par celui-ci et une zone propice pour l'évacuation de la chaleur absorbée.

Cette zone, dotée d'ailettes, est placée à l'extérieur de l'alternateur en étant éloignée de celui-ci en sorte qu'elle est fragile et que ces ailettes risques de s'encrasser ce qui diminue l'évacuation de la chaleur.

### Objet de l'invention

La présente invention a pour but de proposer une solution au problème de refroidissement des machines électriques tournantes, qui ne présente pas les inconvénients précités de l'état de la technique.

C'est également un autre but de l'invention de tirer partie des caloducs.

Selon l'invention ces buts sont résolus par la partie caractérisante de la revendication 1.

Selon une caractéristique de l'invention la zone de condensation s'étend en regard , d'au moins un passage du carter.

Cette zone de condensation présente avantageusement au moins une saillie de dissipation de la chaleur, telle qu'une ailette ou un plot, en regard dudit passage pour améliorer encore le refroidissement.

Grâce à l'invention le dispositif de redressement est proche du carter en sorte que le ou les caloducs sont moins fragiles et ont une forme plus simple.

Grâce à la présence du ventilateur et donc à la connexion forcée, la zone de condensation est nettoyée et est bien refroidie. Il en est d'autant plus ainsi que cette zone est avantageusement implantée au dessus d'un passage.

Les passages sont constitués par exemple par les ouvertures ou les ouïes précitées suivant la nature du ventilateur respectivement du type centrifuge ou centripète.

Grâce à l'invention, qui fait intervenir une convexion forcée et non naturelle comme dans le document US A 4 295 067, on obtient une très bonne évacuation de la chaleur.

Le dispositif de redressement est plus perméable, c'est-à-dire plus aéré, et est avantageusement protégé dans un mode de réalisation par le capot.

Les pertes de charges sont donc réduites ainsi que les bruits.

Le dispositif de refroidissement est plus compact en sorte que dans une variante il peut être implanté à la périphérie externe du carter au niveau des ouïes de celui-ci.

Pour une meilleur évacuation de la chaleur, une diminution des pertes de charge, diminution des bruits, un meilleur nettoyage du ou des caloducs et un meilleur refroidissement, le ventilateur comporte avantageusement deux séries de pales comme décrit par exemple dans le document FR A 2 811 156 déposé le 30/06/2000.

En variante ce ventilateur comporte par exemple au moins deux flasques superposés et au moins deux série de pales comme décrit par exemple dans le document FR A 2 741 912.

En variante au moins une pale d'au moins l'une des séries de pales est constituée par un caloduc permettant de refroidir également le rotor.

La solution est dans tous les cas simple et économique.

Selon une autre caractéristique de l'invention l'enceinte présentant une section transversale et une longueur, qui peuvent varier et sont adaptables aux données constructives de la machine.

Selon encore une autre caractéristique de l'invention l'enceinte peut avoir la forme d'un tube ou d'une plaque d'une section transversale et d'une longueur quelconque.

Selon encore une autre caractéristique de l'invention le support d'un élément électronique redresseur comporte un creux dans lequel est disposée la zone d'évaporation d'un caloduc.

Selon encore une autre caractéristique de l'invention le support d'un élément électronique redresseur est monté sur la zone d'évaporation d'un caloduc réalisé de façon à former un organe de support mécanique.

Avantageusement ce support est implanté en partie en regard d'au moins un passage pour améliorer sont refroidissement.

Dans une forme de réalisation ce support présente des ailettes pour améliorer encore son refroidissement.

Selon encore une autre caractéristique de l'invention pour une machine de type comprenant un palier arrière pourvu d'ouvertures axiales de passage d'un écoulement d'air de refroidissement, les saillies, telles que des ailettes, de dissipation de chaleur précitées se trouvent dans l'écoulement d'air de refroidissement au-dessus desdites ouvertures axiales.

Selon encore une autre caractéristique de l'invention la machine, pour améliorer encore son refroidissement et également celle du dispositif de redressement, comporte également au moins un caloduc supplémentaire.

Ainsi dans un mode de réalisation des moyens de refroidissement du stator comprenant au moins un caloduc disposé dans le carter, en s'étendant avantageusement parallèlement à l'axe du stator.

Selon encore une autre caractéristique une pluralité de caloducs est insérée dans le carter et en ce que les caloducs sont répartis autour de la périphérie du palier.

Selon encore une autre caractéristique le carter porte sur sa face périphérique extérieure des ailettes de dissipation, associées aux caloducs.

Selon encore une autre caractéristique pour une machine du type comprenant un carter doté à sa périphérie externe d'ouïes latérales de sortie de l'écoulement d'air de refroidissement, au moins un caloduc inséré dans le carter s'étend jusqu'à dans une ouïe radiale, la partie du caloduc se trouvant dans l'ouïe constituant une zone de condensation.

Cette zone est moins fragile que celle du document US A 4 295 067 car avantageusement elle ne s'étend pas à l'extérieur du carter. Cette zone est également bien nettoyée.

Selon encore une autre caractéristique la machine comporte des moyens de refroidissement du stator comprenant au moins un caloduc dont la zone d'évaporation est située dans le corps, que présente le stator, et dont la zone de condensation est située à l'extérieur du carter de la machine.

Selon encore une autre caractéristique la zone de condensation d'un caloduc radial est libre à l'extérieur du carter de la machine.

Selon encore une autre caractéristique le carter de la machine est entouré d'une chemise extérieure et un espace annulaire est délimité entre le carter et la chemise extérieure qui est parcourue par un fluide de refroidissement tel que de l'eau, et en ce que la zone de condensation d'un caloduc radial est disposée dans cet espace annulaire.

Selon encore une autre caractéristique un caloduc radial est susceptible de s'étendre par sa zone d'évaporation dans une encoche du corps que présente le stator.

Selon encore une autre caractéristique au moins un caloduc supplémentaire est axialement inséré dans le rotor de la machine et s'étend par au moins une extrémité vers l'extérieure, cette extrémité constituant une zone de condensation du caloduc.

Selon encore une autre caractéristique l'extrémité extérieure de condensation du caloduc est pourvue d'une pale de ventilateur.

Cette pale permet de bien refroidir le dispositif de redressement ainsi que le rotor adjacent.

Selon encore une autre caractéristique au moins un caloduc est inséré dans le rotor de la machine et est incliné par rapport à l'axe de celle-ci pour au moins favoriser le retour par des forces centrifuges du fluide caloporteur de la zone de condensation à la zone d'évaporation.

Selon encore une autre caractéristique au moins un caloduc est inséré radialement dans le rotor, dont la zone de condensation se trouve dans l'entrefer délimité entre le rotor et le stator.

Selon encore une autre caractéristique pour une machine comportant un rotor pourvu d'encoches de réception d'un bobinage d'excitation, le fond d'au moins certaines encoches de rotor sont configurées pour la réception d'un caloduc.

Selon encore une autre caractéristique un caloduc supplémentaire est disposé dans au moins une encoche du corps que présente le stator, avantageusement au fond de cette encoche.

Selon encore une autre caractéristique pour une machine comprenant un paquet de tôles maintenu par des tirants axiaux, les orifices de passage des tirants de maintien du paquet de tôles du rotor présentent des excroissances pour la réception de caloduc.

Selon encore une autre caractéristique au moins certains tirants de maintien du paquet de tôles du rotor sont configurés en caloducs.

Selon encore une autre caractéristique pour une machine du type comportant au moins un bobinage de stator formé par des conducteurs en forme d'épingles disposées dans des encoches du corps que présente le stator, au moins certaines épingles sont réalisées sous forme de caloducs.

On appréciera que l'utilisation d'épingles d'une manière générale permet de diminuer les pertes de charges car les parties saillantes des épingles, appelées chignons, s'étendant de part et d'autre du stator sont plus perméables au passage du fluide de refroidissement le plus souvent de l'air.

L'air de refroidissement circule mieux à l'intérieur du carter ce qui permet de mieux refroidir le dispositif de redressement plus aéré grâce aux caractéristiques de l'invention.

D'une manière générale lorsque l'on refroidit mieux le stator, notamment son corps ou son bobinage, on refroidit mieux également le dispositif de redressement connecté au bobinage du stator.

Selon encore une autre caractéristique le carter de la machine est entouré d'une plaque creuse configurée pour constituer un caloduc et mieux refroidir le stator.

Selon encore, une autre caractéristique de l'invention l'arbre du rotor est réalisé sous forme d'un caloduc.

Selon encore une autre caractéristique l'espace interne de réception du fluide caloporteur de l'arbre du rotor présente des parois inclinées par rapport à l'axe du rotor pour au moins favoriser un retour du fluide caloporteur à l'état de condensât dans la zone d'évaporation par forces centrifuges.

Selon encore une autre caractéristique l'extrémité extérieure de l'arbre de rotor comporte, sur sa face extérieure périphérique, des éléments de dissipation de la chaleur dégagés par la zone de condensation, tels que des ailettes et, le cas échéant, une roue ventilateur.

Selon encore une autre caractéristique la partie de condensation d'un caloduc axial ou incliné placé dans le rotor est disposée dans une partie de flasque de ventilateur.

Grâce à l'invention on peut augmenter le nombre d'éléments électroniques redresseurs du courant du stator, tels que des diodes.

Ainsi dans un mode de réalisation le stator est du type hexaphasé et comporte donc 6 bobinages, tandis que le dispositifs de redressement comporte au moins un caloduc et par exemple 12 diodes ou en variante 12 transistors du type MOSFET ou 12 puces électroniques.

En variante le stator est du type triphasé et le dispositif de redressement comporte au moins un caloduc et par exemple 6 diodes de redressement du courant.

Le dispositif de redressement peut comporter de manière distincte une partie négative portant par exemple des diodes négatives de redressement et une partie positive portant par exemple des diodes positives de redressement, chaque partie positive et négative comprenant au moins un caloduc.

En variante la partie négative comporte par exemple des diodes du type « press fit » emmanchées dans le palier arrière ou soudées, de préférence par un soudage du type laser, sur une plaque fixée elle-même sur le palier arrière, avec en variante intervention d'une couche électriquement isolante notamment dans le cas d'un alterno-démarreur.

La partie positive comporte par exemple un organe de support des diodes positives et au moins un caloduc inséré dans l'organe de support avantageusement en forme de plaque dissipatrice de chaleur, par exemple en aluminium, permettant d'évacuer la chaleur.

En variante l'organe de support, avantageusement en forme de plaque, porte tous les élément redresseurs (diodes, MOSFET, puces..) et au moins un caloduc. Cet organe est fixé à isolation électrique sur le palier arrière par exemple à l'aide de plots électriquement isolants ou d'une couche électriquement isolante.

A la figure 2 on voit une borne 600, appelée borne B+, destinée à être reliée au réseau de bord du véhicule et à la borne positive de la batterie. Cette borne est en variante intégrée à l'organe de support.

En variante le caloduc sert de support à cette borne B+.

En variante on soude ou l'on brase les éléments redresseurs sur la plaque de support, qui est fixé, par exemple par brasage, ensuite sur le caloduc.

Les éléments redresseurs sont dans un mode de réalisation directement brasés ou collés ou soudés, avantageusement par un soudage du type laser, directement sur le caloduc ou en variante sur une plaque dissipatrice de chaleur, ou d'une manière générale l'organe de support, que l'on vient ensuite rapporter sur le caloduc par brasage, collage ou soudage, avantageusement du type laser.

On diminue ainsi la résistance de contact thermique entre l'élément redresseur, tel qu'une diode, et son organe de support ou entre la diode et le caloduc suivant le cas. L'évacuation de la chaleur est réalisée par la partie basse de l'élément redresseur, par exemple par le boîtier de la diode, ce qui constitue un chemin du flux de chaleur le plus direct.

Le caloduc, selon une caractéristique de l'invention peut servir de conducteur électrique.

On peut se contenter de souder qu'une partie de la surface de l'élément redresseur, par exemple 20 à 30% de la surface du boîtier de la diode, ce qui constitue un gain de temps de soudage et réduit d'autant l'exposition de l'élément semi conducteur porté par un socle saillant appartenant au boîtier de la diode décrite par exemple dans le document FR A 2 446 541 auquel on se reportera pour plus de précisions.

Les éléments redresseurs peuvent être placés côte à côte et on évite les contraintes liées au processus d'emmanchement à force des diodes du type « press fit ».

L'organe de support ou le caloduc est donc plus compact.

### Description sommaire des dessins

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant plusieurs modes de réalisation de l'invention et dans lesquels:
- la figure 1 est une vue schématique, en coupe axiale, d'une machine électrique tournante selon l'état de la technique ;
- la figure 2 est une vue en perspective d'une réalisation concrète d'un pont redresseur d'une machine selon la figure 1 ;
- la figure 3 est une vue en direction de la flèche III de la figure 2 ;
- la figure 4 montre l'arrière de la machine de la figure 3 sans le dissipateur et sans le connecteur ;
- la figure 5 est une vue en coupe, schématique, d'un module électronique redresseur externe à une machine électrique tournante, selon l'état de la technique ;
- les figures 6A à 6C sont des vues en coupe schématique de trois versions de réalisation similaires d'un pont redresseur, constituant un dispositif de redressement selon l'invention, pour une machine électrique tournante du type représenté sur la figure 1 ;
- les figures 7A et 7B sont des vues schématiques respectivement dans la direction axiale de la machine et en coupe le long de la ligne VIIB-VIIB de la figure 7A, d'un autre mode de réalisation d'un pont redresseur selon l'invention, pour une machine du type représenté sur la figure 1 ;
- les figures 8A et 8B sont des vues respectivement dans la direction axiale de la machine et en coupe selon la ligne VIIIB-VIIIB de la figure 8A d'encore un autre mode de réalisation d'un pont redresseur selon l'invention, pour une machine du type représenté sur la figure 1 ;
- la figure 9 est une vue en coupe d'un module électronique externe, pourvu d'un dispositif de refroidissement selon l'invention ;
- les figures 10A et 10B sont des vues respectivement en coupe axiale d'une machine électrique tournante selon la figure 1 dont le stator est pourvu d'un dispositif de refroidissement selon l'invention, et d'un détail du dispositif de refroidissement ;
- les figures 11A et 11B sont des vues respectivement en coupe axiale d'une machine électrique tournante selon la figure 1 dont le rotor est équipé d'un dispositif de refroidissement et d'un détail de ce dispositif de refroidissement ;
   les figures 12A et 12B sont des vues en coupe transversale d'un rotor d'une machine selon la figure 1, pourvue d'un dispositif de refroidissement selon l'invention, disposé dans les encoches des bobinages du rotor ;
- la figure 13 est une vue en coupe transversale du rotor d'une machine selon la figure 1, pourvu d'un dispositif de refroidissement selon l'invention au niveau des tirants de maintien du paquet de tôles du rotor ;
- la figure 14 est une vue schématique illustrant la réalisation d'un tirant de maintien du paquet de tôles d'un rotor d'une machine selon la figure 1, sous forme d'un caloduc ;
- les figures 15A et 15B illustrent une épingle d'un bobinage de stator d'une machine selon la figure 1, qui est réalisée sous forme de caloduc ;
- les figures 16A et 16B sont des vues respectivement en coupe selon la ligne XVIA-XVIA de la figure 16B et dans la direction axiale de la machine d'un élément de support d'un composant électronique, réalisé sous forme d'un caloduc selon l'invention ;
- la figure 17A est une vue en coupe d'encore un autre mode de réalisation d'un support d'un composant électronique réalisé de façon à constituer un dispositif de refroidissement par caloduc selon l'invention ;
- les figures 17B1 et 17B2 sont des vues en coupe schématique illustrant le mode de réalisation d'un support d'un composant électronique, réalisé sous forme d'un dispositif de refroidissement par caloduc selon l'invention ;
- les figures 17C1 et 17C2 sont des vues en coupe illustrant un autre procédé de réalisation d'un support d'un composant électronique, réalisé sous forme d'un dispositif de refroidissement par caloduc selon l'invention,
- les figures 18 à 20 sont des illustrations schématiques de trois modes de réalisation d'un caloduc selon l'invention ;
- la figure 21 est une vue similaire à la figure 6C d'une autre variante de réalisation d'un pont redresseur selon l'invention ;
- la figure 22 est une vue en perspective d'un dissipateur porteur de diodes positives, réalisé selon l'invention ;
- la figure 23 est une vue en coupe axiale d'une machine électrique tournante et montre plusieurs variantes de réalisation d'un dispositif de refroidissement par caloduc selon l'invention ;
- la figure 24 est une vue en coupe radiale du rotor de la machine selon la figure 23 et montre dans une vue en coupe le long de la ligne XXIV-XXIV de la figure 23 une variante de refroidissement du rotor ;
- la figure 25 est une vue en coupe radiale schématique d'une machine du type selon la figure 1, et destinée à montrer plusieurs possibilités de refroidissement du stator par un dispositif de refroidissement par caloduc selon l'invention ;
- la figure 26 est une vue en détail à plus grande échelle de diverses possibilités de refroidissement par caloduc du stator d'une machine électrique tournante, similaire au dispositif représenté sur la figure 25, et
- la figure 27 est une vue en perspective, schématique sur la face périphérique du palier 4 pourvu des moyens de refroidissement par caloduc selon la figure 26 ;
- la figure 28 est une vue analogue à la figure 22 pour encore un autre exemple de réalisation ;
- la figure 29 est une vue partielle en perspective d'un ventilateur à deux séries de pales

### Description d'exemples de réalisation préférés de l'invention

L'invention tire partie du dispositif de refroidissement qui est un système du type caloduc, c'est-à-dire un système qui assure le transfert de chaleur d'une source chaude vers une source froide selon un cycle fermé d'évaporation et de condensation d'un fluide caloporteur circulant à l'intérieur d'un organe creux, par exemple de type tubulaire.

Le dispositif caloduc peut avoir une forme quelconque, c'est-à-dire être un tube par exemple à section transversale circulaire, rectangulaire ou carré ou en U ou une plaque. Cette propriété de pouvoir revêtir des formes différentes présente l'avantage considérable que le caloduc peut être configuré de façon à être parfaitement adapté à l'environnement dont il doit assurer le refroidissement, en fonction par exemple de données constructives de la machine et de la zone productrice de chaleur. Le caloduc en plus d'avoir toute forme de section transversale souhaitée, peut être configuré de diverses façons dans sa direction longitudinale. Ainsi il peut être rectiligne, courbe ou se composer de portions rectilignes et courbes. A ces avantages s'ajoute encore que la longueur du caloduc peut être choisie quasi-librement. Par conséquent, le dispositif de refroidissement grâce à l'utilisation de caloporteurs permet d'absorber directement la chaleur à l'emplacement de la production de celle-ci, n'importe où dans la machine, et transférer cette chaleur par une voie parfaitement adaptable aux données constructives de la machine à un emplacement permettant, de façon optimale, de l'évacuer de la machine.

Grâce à son dispositif de refroidissement extrêmement efficace et adaptable, l'invention permet la conception de machines puissantes du fait que les contraintes imposées par les considérations thermiques sont fortement réduites.

On décrira ci-après, à titre d'exemple des multiples possibilités d'utilisation du système de refroidissement de l'invention, un certain nombre de modes de réalisation de celui-ci.

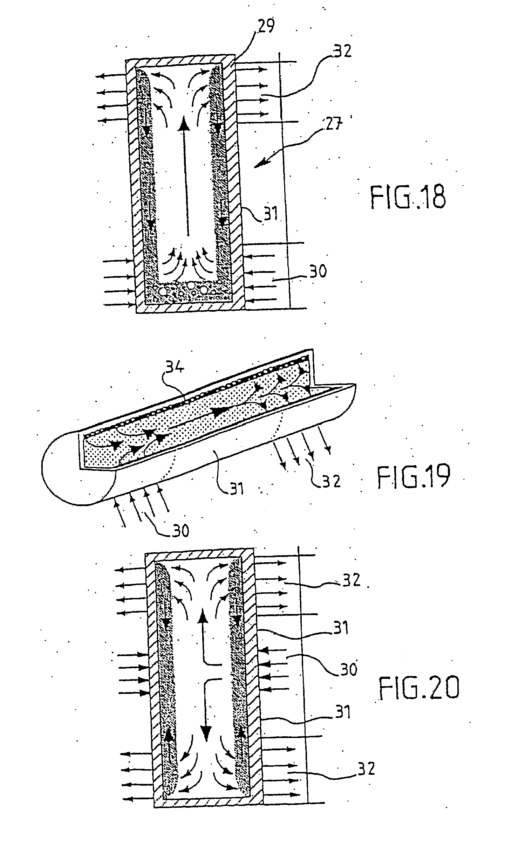

En se reportant aux figures 18 et 19, on expliquera tout d'abord deux types de caloduc se différenciant par leur mode de fonctionnement. Le caloduc selon la figure 18 est du type thermosiphon tandis que le caloduc de la figure 19 est du type à pompage capillaire.

Dans les deux cas le caloduc désigné de façon générale par la référence 27 comporte une enceinte 29 étanche métallique, telle qu'une enceinte à base de cuivre. L'enceinte 29 contient un liquide en équilibre avec sa vapeur en absence totale d'air ou, de façon générale, de tout autre gaz. Le caloduc comporte trois zones à savoir une première zone d'évaporation 30, où le liquide absorbe de la chaleur de l'environnement, à une extrémité de l'enceinte 29, une deuxième zone adiabatique intermédiaire 31 et une troisième zone 32 de condensation du liquide, au niveau de l'autre extrémité, où, grâce à la condensation, le liquide restitue la chaleur absorbée dans la zone d'évaporation 30 à l'environnement. Après sa condensation dans la troisième zone 32, formant condensateur, le fluide à l'état de condensat retourne à la première zone 30, formant évaporateur, grâce à des forces de gravité lorsque, comme dans le cas de la figure 18, le condensateur se trouve au-dessus de l'évaporateur ou, comme dans le cas de la figure 19 du caloduc à pompage capillaire grâce à l'effet de la capillarité développée dans un milieu poreux indiqué en 34, qui tapisse la paroi intérieure de l'enceinte 29. Le retour pourrait aussi se faire sur l'effet d'autres forces appropriées, par exemple de forces centrifuges. Le réseau capillaire peut être réalisé sous différentes formes. Il peut être fritté, formé par des couches de tissu ou tapis de films métalliques, ou être formé par des rainures axiales ou circonférentielles dans la face interne de l'enceinte. On peut aussi combiner les deux modes de retour par gravité et par force capillaire dans un caloduc. Il est encore possible de concevoir un caloduc comportant deux zones de condensation 32 chacune à une extrémité de l'enceinte, la zone d'évaporation 30 se trouvant alors être située entre les zones de condensation comme on le voit sur la figure 20, ou un caloduc à deux zones d'évaporation et une zone de condensation entre les deux zones d'évaporation.

En se reportant aux figures 6A à 6C on décrira plusieurs possibilités de conception d'un pont redresseur tel qu'indiqué en 9 sur les figures 1 à 3, qui sont rendues possibles par l'utilisation de dispositifs de refroidissement à caloduc selon l'invention. En comparaison au pont redresseur selon l'état de la technique, avec des dissipateurs, porteurs des éléments électroniques 37 redresseurs du courant engendré dans les bobinages du stator, en forme d'une plaque unique recouvrant toute la zone disponible représentée par la zone hachurée sur la figure 4, la conception nouvelle selon l'invention du dissipateur présente l'avantage illustré clairement par les figures que le support peut avoir une forme quelconque et, au lieu d'être une pièce unique, être décomposée en une pluralité d'éléments de support dont la forme peut varier et est adaptable aux données constructives de l'environnement.

Ces caloducs ont une conductivité thermique très élevée ce qui procure l'avantage de bien transférer la chaleur de la source chaude à la source froide. En outre la portion de liaison entre la zone de condensation et la zone de vaporisation du caloduc est avantageusement isotherme, celui-ci permet d'uniformiser la température dans la pièce dans laquelle il est introduit en éliminant ainsi les contraintes thermomécaniques résiduelles.

Les parois de l'enceinte 29 du caloduc sont métalliques et le fluide de travail est choisi en fonction de la nature des parois délimitant l'enceinte, des performances envisagées et de la plage de température de travail du caloduc.

En fonction de la nature du fluide caloporteur, pour éviter des défaillances comme l'oxydation, on peut prévoir des parois avec plusieurs couches métalliques

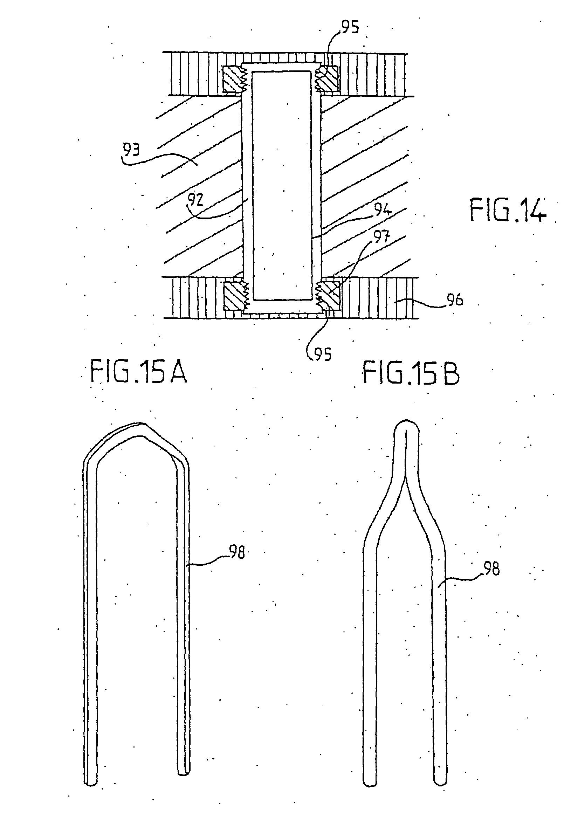

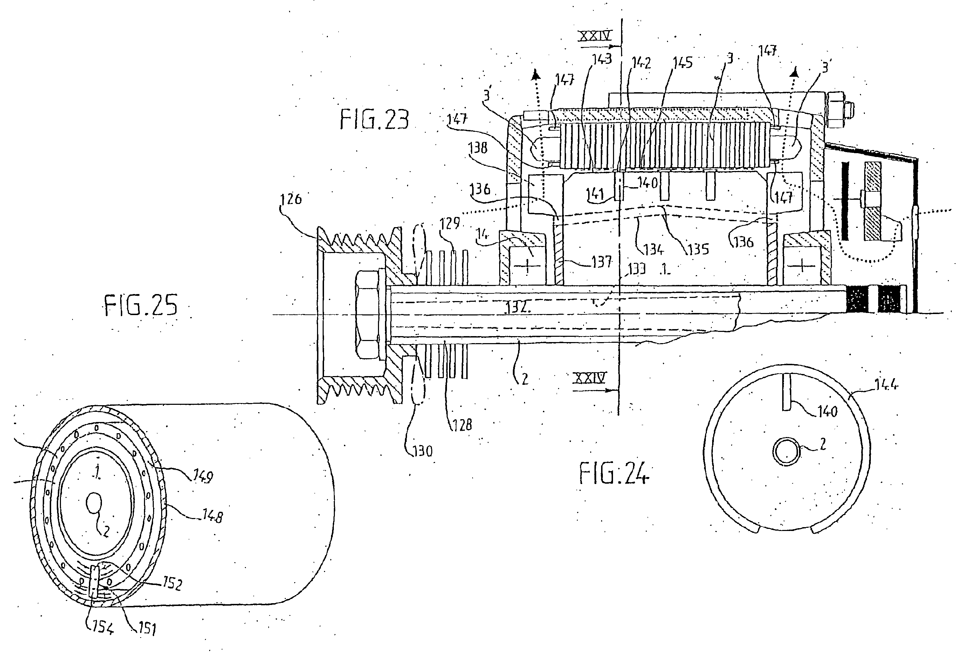

On peut utiliser par exemple de l'acier plaqué intérieurement avec du cuivre et comme fluide de travail l'eau. Tel est le cas pour le mode de réalisation de la figure 23, décrite ci-après, en ce qui concerne la face 133 de l'arbre 2 ou en variante la paroi tubulaire 14 de la figure 14.

Dans les figures 6a à 6C le fluide de caloporteur est de l'eau et les parois de l'enceinte du caloduc sont en cuivre ou en nickel. En variante le fluide caloporteur est du méthanol et les parois de l'enceinte du caloduc sont en cuivre, en acier inoxydable ou en nickel. En variante le fluide de travail est de l'ammoniaque et les parois de l'enceinte sont en nickel, en aluminium ou en acier inoxydable.

Les figures 6A, B, C représentent trois vues respectivement de section, de côté et de dessus, chacune avec des variantes, d'un premier type de solution, d'un dispositif de redressement du courant engendré dans le bobinage du stator sous la forme d'un ensemble pont redresseur placé à l'arrière d'un alternateur ou d'un alterno-démarreur. Les éléments électroniques redresseurs désignés par la référence 37, tels que des diodes ou des transistors MOSFET ou des puces électroniques, qui dissipent de la puissance calorifique qu'il faut évacuer, sont insérés à l'intérieur d'un élément support 38 en un matériau thermiquement conducteur, par exemple métallique, ou déposés sur celui-ci. Dans l'exemple représenté, deux diodes 37 sont insérées dans un élément de support 38 en forme d'une plaque, par exemple en aluminium, de faible dimension. L'élément de support 38 peut être fixé par exemple à l'aide de colonnettes 40 sur le palier arrière 6. L'élément ou organe de support 38 comporte des creux ou des trous dans lequel sont insérés un ou, comme dans l'exemple représenté, deux caloducs 42 qui s'étendent à l'intérieur de la plaque de support 38 le long des bords longitudinaux de la plaque, avec les diodes 37 disposées entre eux. Les deux caloducs 42 s'étendent dans des directions opposées au-delà des bords transversaux du support 38 jusqu'au dessus des ouvertures axiales 12 adjacentes, qui sont prévues dans le palier arrière 6, comme l'illustre clairement la figure 6C.

Ainsi suivant une caractéristique de l'invention au moins un caloduc 42, 43 s'étend au dessus d'une ouverture 12 adjacente pour une meilleur évacuation de la chaleur.

Dans ce mode de réalisation, pour améliorer encore le refroidissement, chaque portion en saillie 43 d'un caloduc 42, située au-dessus d'une ouverture axiale 12, porte une pluralité d'ailettes 45 de dissipation de chaleur, qui sont orientées parallèlement les unes aux autres et se trouvent donc dans l'écoulement d'air de refroidissement s'écoulant à travers cette ouverture. L'élément de support 38 est situé également au dessus d'une ouverture 12 pour un meilleur refroidissement.

Les ailettes peuvent être de section rectangulaire, de forme pointue ou autre.

Les ailettes peuvent se croiser pour former par exemple un réseau en nid d'abeille.

En variante les ailettes sont remplacées par des plots avantageusement profilés, par exemple en forme de goutte d'eau. D'une manière générale le caloduc porte avantageusement une pluralité de saillie de dissipation de la chaleur.

Il en est de même dans les autres figures.

On appréciera que l'on supprime les ailettes 19 de la figure 1 tout en augmentant les performances du dispositif ou pont redresseur et en économisant de la matière en sorte qu'il y a plus de place au niveau du palier arrière 6.

La solution est donc simple et économique.

On appréciera également la compacité du dispositif de refroidissement 42, 43, 38 des éléments électroniques 37 et le fait qu'il soit protéger par le capot 10 de la figure 1, ajouré pour passage de l'air.

Ce dispositif de refroidissement est moins fragile que celui du document US A 4 295 067 et est plus aéré.

En outre on tire partie de la présence du ventilateur 7 de la figure 1 créant un écoulement forcé du fluide de refroidissement, ici de l'air, traversant les ouvertures 12, les ouïes 13, les ouvertures 11 du capot 10 et le dispositif de refroidissement.

A la figure 1 le ventilateur 7 est du type centrifuge. En variante le ventilateur 7 est du type centripète en sorte que les ouïes 13 sont des ouïes d'aspiration du fluide de refroidissement et les ouvertures 12 des ouvertures de refoulement du fluide de refroidissement, la circulation de l'air étant réalisée en sens inverse. Dans ce cas le ou les caloducs du dispositif de refroidissement sont situées alors au dessus d'une ouïes 13, le dispositif de refroidissement étant alors porté par la périphérie externe globalement d'orientation axiale du palier arrière 6.

Les ouïes 13 et les ouvertures 12 constituent des passages du fluide de refroidissement, ici de l'air, à circulation forcée par au moins un ventilateur 7, 8.

L'invention tire partie des passages 12, 13 réalisés dans le carter.

Plus précisément, selon une caractéristique l'invention, la machine électrique tournante comprend un dispositif de refroidissement par écoulement forcé d'un fluide de refroidissement, tel que de l'air, à travers de passages 12, 13 dans le carter à l'aide d'au moins un ventilateur 7, 8. Le caloduc appartient au dispositif de redressement et s'étend par sa zone de condensation jusque dans ledit écoulement du fluide de refroidissement.

Selon une caractéristique de invention la zone de condensation s'étend en regard, avantageusement en partie, d'au moins un passage du carter.

Cette zone de condensation présente au moins une saillie, telle qu'une ailette ou un plot, en regard du duit passage.

Bien entendu le carter 4, en variante, comporte un palier avant refroidit par eau.

En variante le carter 4 comporte plus de deux parties, par exemple trois parties à savoir un palier avant et un palier arrière s'étendant de part et d'autre d'une partie médiane portant le stator 3.

Cette partie médiane peut être éventuellement refroidit par eau.

Toutes les combinaisons sont possibles.

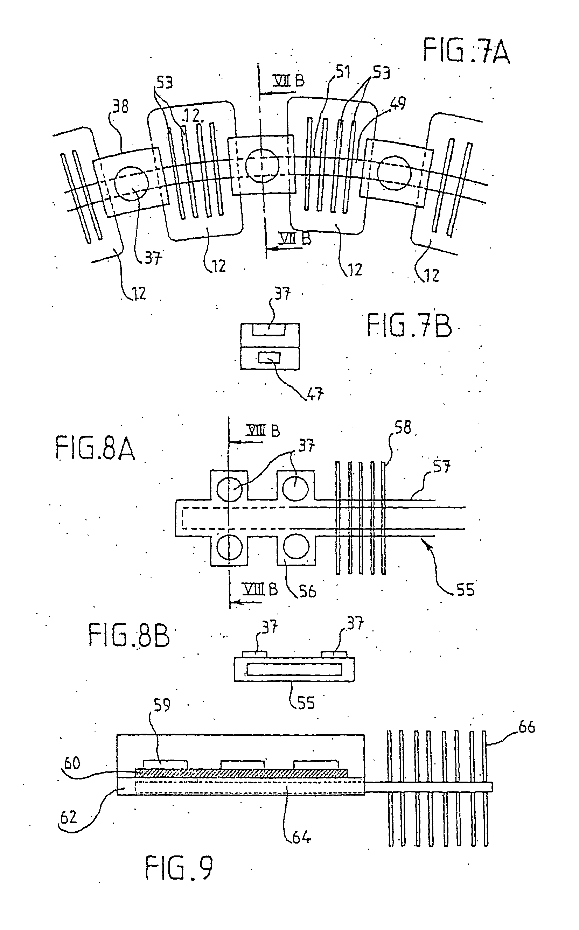

On appréciera que dans tous les cas le ou les caloducs sont moins fragiles car ils ne comportent pas'de parties coudées s'étendant dans des plans perpendiculaires comme dans les figures 9 à 14 du document US A 4 295 067. En outre la zone de condensation est adjacente au palier arrière 6.

Conformément à la description précitée des caloducs, en se référant aux figures 18 et 19, la zone d'évaporation des caloducs 42 est disposée à l'intérieur du support 38 près des diodes 37 de façon que la chaleur dissipée par ces diodes puisse être absorbée par la vaporisation du fluide caloporteur et transférée à la zone 43 extérieure qui constituent la zone de condensation. Le nombre et la forme des saillies, ici des ailettes 45, ainsi que des dispositifs de caloduc et des diodes sont bien entendu variables. On appréciera que le support 38 comportes également des ailettes disposées en regard de l'ouverture 12 pour mieux refroidir le support 38.

On appréciera que les ailettes 45 permettant une meilleure évacuation de la chaleur. Ces ailettes, d'une manière générale les saillies 45, sont implantées à la bonne place au niveau des ouvertures 12.

Cela est rendu possible du fait que l'on peut réduire la taille du support 38.

On appréciera, grâce à la circulation du fluide de refroidissement, ici de l'air, que le dispositif de refroidissement est autonettoyant. En particulier les ailettes de celui-ci ne risquent pas de s'encrasser contrairement à celles du document US A 4 295 067 non protégées.

D'une manière générale on a un grand choix pour implanter la zone de condensation et ainsi profiter des zones plus favorables au refroidissement.

Ainsi selon une autre variante, la zone de condensation, c'est-à-dire la source froide du ou des caloducs peut être placée au-dessus des supports 38, mais toujours dans l'écoulement d'air passant alors au-dessus du support à la manière indiquée par la ligne fléchée sur la figure 1. Ces supports sont avantageusement implantés au dessus des ouvertures 12.

Grâce à l'invention on bénéficie de nombreuses possibilités pur conformer le support 38 avantageusement thermiquement conducteur en sorte que l'on peut fractionner celui-ci.

Ainsi les figures 7A et 7B illustrent une autre version de réalisation d'un dissipateur selon l'invention, qui comporte une pluralité d'éléments de support 38 de faible taille, chacun avantageusement en forme d'un parallélépipède et dimensionné pour permettre l'insertion d'une seule diode 37 en forme de puce. La diode occupe la partie supérieure de l'élément 38 tandis que la partie inférieure comporte un perçage 47 à section transversale rectangulaire dans l'exemple représenté, et est destinée au passage d'un caloduc 49 qui forme un ensemble s'étendant à travers tous les supports 38, comme on le voit sur la figure 7A et passe au-dessus des ouvertures axiales 12 du palier arrière. Les portions du caloduc 49 situées à l'intérieur des supports 38 sous les diodes 37 constituent des zones d'évaporation, c'est-à-dire des sources chaudes, tandis que chaque portion 51 au-dessus d'un ouverture 12 constitue une zone de condensation, c'est-à-dire une source froide. Cette zone porte avantageusement une pluralité de saillies, ici d'ailettes de dissipation 53, avantageusement implantées au dessus d'une ouverture 12.

Bien entendu, on pourrait aussi envisager de réaliser le caloduc 49 sous forme d'un tube sur lequel peuvent être fixés des supports 38 alors en forme de petites plaques porteuses chacune d'une diode 37.

Le caloduc peut servir de support.

Ainsi les figures 8A et 8B illustrent encore une autre possibilité de réalisation d'un dissipateur selon l'invention. Dans ce cas, quatre diodes 37 de redressement sont disposées sur un caloduc 55 en forme d'une croix avec deux branches transversales parallèles 56, portant chacune deux diodes 37. La partie du caloduc qui porte les quatre diodes 37 constitue la source chaude du caloduc, tandis que la source froide 57 se trouve dans la partie formant le montant du caloduc en forme de croix. La zone formant la source froide porte avantageusement une pluralité d'ailettes de dissipation de chaleur 58 implantées avantageusement dans un environnement de convection forcée, les ailettes 66 étant placées avantageusement au dessus des ouvertures d'aspiration 12 ou des ouïes d'aspiration 13 suivant la nature centrifuge ou centripète du ventilateur 7 de la figure 1.

Il est à noter que dans les modes ou variantes de réalisation d'un dissipateur appartenant à un dispositif de redressement selon l'invention, qui viennent d'être décrits en se référant aux figures 6 à 8, les supports des diodes et/ou les caloporteurs sont fixés sur une pièce de support, le cas échéant directement le palier arrière, par tout type de moyen de fixation approprié, tel que par exemple des colonnettes 40 selon la figure 6A et 6B.

Grâce à l'invention on peut simplifier les modules électroniques et ainsi supprimer les ailettes 23 de la figure 5.

La figure 9 est une vue en coupe d'un module électronique externe pour un alterno-démarreur comportant un dispositif de refroidissement selon l'invention. Dans ce module, les éléments électroniques 59 sont montés sur un substrat d'électronique 60 monté sur un support mécanique thermiquement conducteur 62. Dans ce support 62 sont insérés un ou plusieurs caloducs 64 dont la zone d'évaporation se trouve sous les éléments électroniques 59 pour absorber la chaleur produite par ceux-ci. Cette chaleur est transférée vers la partie extérieure du caloduc qui constitue la zone de condensation et est porteuse avantageusement des ailettes de dissipation 66 avantageusement dans un environnement de convection forcée, les ailettes 66 étant placées avantageusement au dessus des ouvertures d'aspiration 12 ou des ouïes d'aspiration 13 suivant la nature centrifuge ou centripète du ventilateur 7 de la figure 1.

En variante, le ou les caloducs 64 peuvent sortir de n'importe quel côté du support mécanique 62. Par exemple, un caloduc 64 peut sortir par l'un des côtés de support 62 et un deuxième caloduc peut sortir par l'autre côté. On pourrait également placer des saillies, ici ailettes de dissipation 66, sur le support mécanique thermiquement conducteur 62.

On peut, à, l'aide d'au moins un caloduc supplémentaire, également refroidir les autres composants de la machine par exemple le carter, le stator et/ou le rotor de celle-ci. Les roulements 14 et 15 de la figure 1 sont également bien refroidis et donc ménagés.

D'une manière générale on peut placer d'autres caloducs au voisinage des sources de chaleur de la machine et augmenter ainsi la puissance de celle-ci. En variante les caloducs peuvent réaliser également une fonction de ventilateurs en sorte que l'on peut supprimer par exemple le ventilateur avant ou réaliser des ventilateurs plus performants, par exemple avec deux séries de pales dont l'une comporte des ailettes, formant des pales, appartenant au moins en partie aux caloducs.

Ces pales caloduc sont implantées en dessous des ouvertures 12 et des ouïes 13

Bien entendu dans les figures 6 à 9 le ventilateur 7 peut être un ventilateur à deux séries de pales. Cela peut être un ventilateur double du type de celui décrit dans le document FR A 2 741 912, c'est-à-dire comportant au moins deux parties possédant au moins deux flasques superposés et au moins deux jeux de pales angulairement décalées les unes par rapport aux autres.

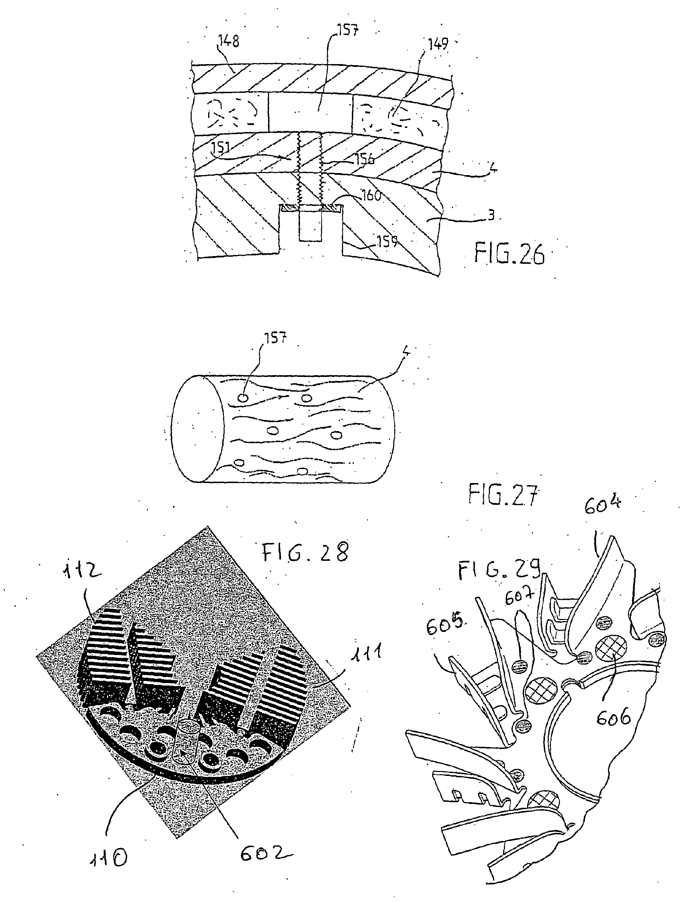

Un tel ventilateur est visible partiellement à la figure 29. Cette vue est une vue partielle en perspective du ventilateur adjacent au palier arrière.

On voit en 604 une pale de la première série de pales et en 605 une pale de la deuxième série de pales. La référence 606 une zone de fixation de l'une des parties du ventilateur au rotor de l'alternateur et en 607 des zones de fixation entre les deux parties , ici métalliques, du ventilateur du type de celui décrit dans le document FR A 2 741 912 précité auquel on se reportera.

Avantageusement l'une des séries de pales comporte au moins un caloduc.

Grâce à l'augmentation du nombre de pales on diminue les pertes de charges à l'arrière de la machine et on augmente le débit d'air ce qui favorise le refroidissement des éléments électroniques 37, 59.

La machine, grâce à l'invention peut être plus puissante et/ou moins bruyante.

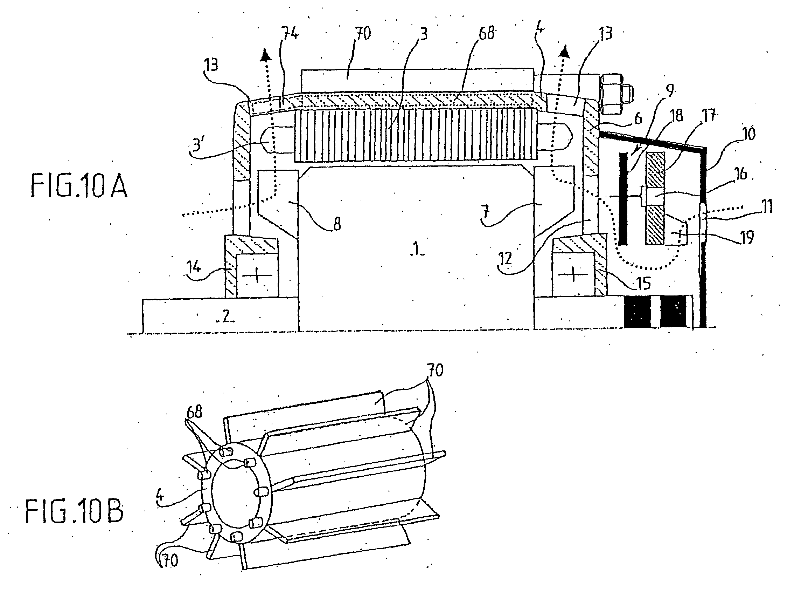

Ainsi la figure 10A montre une autre application du principe de refroidissement par caloduc selon l'invention, à savoir au refroidissement du stator d'une machine électrique tournante du type par exemple représentée sur la figure 1. Sur là figure 10A on utilise les mêmes références que sur la figure 1 pour désigner des parties ou composants identiques ou similaires.

Pour comprendre le problème que résout le dispositif de refroidissement selon la figure 10A, on rappel que lors du fonctionnement de la machine consistant en un alternateur comme à la figure 1, un courant électrique est induit dans les bobinages 3' du stator 3, ce qui entraîne un échauffement de ce dernier. De même, des phénomènes électromagnétiques liés à la création de ce courant induit provoquent également des pertes dans les différents composants de la machine, qui se transmettent en particulier au carter 4 et provoquent l'échauffement de celui-ci. Or le débit électrique généré par la machine dépend directement de l'échauffement. Plus l'échauffement du stator 3 est important, plus le débit électrique sera faible. Il faut donc refroidir le stator pour augmenter le débit électrique et les rendements de la machine, ce qui est réalisé dans le cas de la figure 10A principalement par le refroidissement de la partie centrale du carter 4 située entre les ouies 13 appartenant aux paliers avant et arrière. Cette partie centrale est implantée au dessus du corps du stator 3 en forme de paquet de tôles. Cette partie centrale constitue la majeure partie de la périphérie externe ou pourtour du carter. Pour mémoire on rappellera de manière précitée que les paliers avant et arrière ont une forme creuse et que les ouies 13 sont réalisées à la périphérie externe de ces paliers et appartiennent à la périphérie externe du carter. Dans un mode de réalisation la partie centrale du carter est donc constituée en partie par la périphérie externe du palier avant et en partie par la périphérie externe du palier arrière. En variante la partie centrale est distincte des paliers avant et arrière, qui sont alors disposées de part et d'autre de la partie centrale du carter. Les ouies sont alors en variante réalisées dans la partie centrale.

A cette fin, un ou avantageusement plusieurs caloducs 68 de forme quelconque sont insérés à l'intérieur du carter 4, plus particulièrement au moins en majeure partie dans la partie centrale de celui-ci, dans laquelle ils s'étendent, dans l'exemple représenté, parallèlement à l'axe de la machine sur pratiquement toute la longueur du stator 3. Comme l'illustre la figure 10B les caloducs sont avantageusement angulairement uniformément répartis sur le pourtour du carter 4, ces caloducs assurent l'évacuation de la chaleur vers l'extérieur, dans un environnement de convection naturelle ou avantageusement forcée. A cette fin, l'invention peut prévoir la disposition d'ailettes de dissipation axiales 70 sur la face extérieure du palier pour augmenter la capacité de refroidissement.

La figure 10A montre encore une possibilité d'accroître le pouvoir de refroidissement des caloducs 68. Comme cela est indiqué en traits interrompus, au moins certaines caloducs peuvent s'étendre selon une caractéristique de l'invention, jusqu'à dans les ouïes radiales 13 de la machine sur le côté du palier avant 5 ou arrière 6 ou même sur les deux, de sorte que la zone de condensation notée 74, c'est-à-dire la source froide des caloducs 68 se trouve dans ces ouïes radiales 13 du palier. Ceci permet d'utiliser le flux d'air provenant des ouvertures axiales des paliers avant et/ou arrière qui sortent radialement par les ouïes 13 pour refroidir les parties externes des caloducs et donc évacuer la chaleur. En variante l'un au moins des ventilateurs 7, 8 est du type centripète en sorte que le flux d'air rentre par les ouïes 13 et sort par les ouvertures 12.

Cette disposition peut, être combinée avec le fait que les ou les caloducs implantés au moins en partie dans les ouïes 13 portent également au moins un élément électronique 37,59. En variante cette disposition est combinée avec celle des figures 6 à 9 en sorte qu'il est prévu au moins pour un caloduc pour une d'ouïe 13 et au moins un caloduc pour une ouverture 12

Selon une variante du dispositif de refroidissement par caloduc du stator, un ou plusieurs caloducs pourraient être placés à l'intérieur même du corps, en forme de paquet de tôles, du stator 3 traversé par les bobinages d'induit 3' à la faveur d'encoches que présente à cet effet ledit corps. Ces bobinages 3' s'étendent en saillie de part et d'autre du corps du stator pour former ainsi qu'on le sait des chignons.

Les caloducs pourraient être orientés axialement et/ ou radialement.

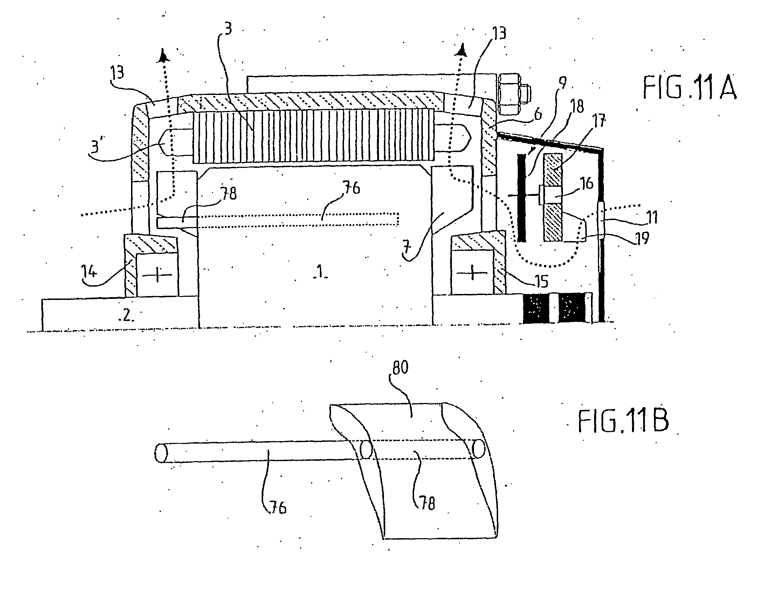

La figure 11A montre l'application du principe du refroidissement par caloduc pour le refroidissement du rotor inducteur d'une machine électrique tournante par exemple un alternateur ou alterno-démarreur du type représenté sur la figure 1. Les mêmes références sont utilisées sur les deux figures pour désigner les parties ou composants identiques ou similaires.

Dans ce cas le rotor a avantageusement la forme de celui décrit dans le document WO 02/054566.

Ce rotor comporte donc un paquet de tôles dans lequel sont intégrés en alternance des aimants permanents et des bobinages d'excitation. Pour ce faire les bobinages d'excitation sont enroulés autour de pôles saillant découpés dans le paquet de tôles du rotor, tandis que les aimants permanents sont reçus dans des logements réalisés dans le paquet de tôles. Ces logements sont fermés par des pièces de maintien dotées d'une partie amagnétique. Les figures 12A à, 13 montrent de tels pôles saillants alternant avec des logements de forme trapézoïdal pour les aimants. Des tirants traversent le paquet de tôles pour relier entre elles les pièces de maintien comme visible dans ce document WO 02/054566 auquel on se reportera pour plus de précisions.

Dans le mode de réalisation de l'invention représenté sur la figure 11A, un ou plusieurs caloducs 76 sont insérés dans le rotor 1, ici dans le paquet de tôles de celui-ci, ou en variante entre les dents d'orientation axiale des roues polaires d'un rotor à griffes. Les caloducs qui s'étendent, dans l'exemple représenté, parallèlement à l'axe du rotor et peuvent être de forme quelconque ressortent vers la partie avant de la machine en 78. Bien entendu, les caloducs peuvent également sortir vers la partie arrière. La zone d'évaporation du ou des caloducs 76 à l'intérieur du rotor 1 absorbe la chaleur générée dans celui-ci. L'énergie calorifique est ensuite transportée via le caloduc vers la zone 78 à l'extérieur du rotor pour être évacuée avantageusement à l'aide du passage d'air provenant des ouïes d'aspiration 12 du palier. On constate que la partie extérieure 78 des caloducs qui constitue la zone de condensation est située, dans l'exemple représenté, au niveau des bords radialement internes des pales du ventilateur 7 ou 8 correspondant qui sont mieux refroidies.

En variante les caloducs sont implantés dans la partie centrale d'un rotor à pôles saillants ou à griffes en dessous du ou des bobinages d'excitation. En variantes les caloduc sont implantés dans les dents des roues polaires d'un rotor à griffes.

En variante, les caloducs peuvent sortir à la fois vers l'avant et vers l'arrière de la machine. Dans ce cas, il est avantageux d'utiliser des caloducs tels que représenté sur la figure 20, c'est-à-dire des caloducs dont les deux extrémités sont configurées en zone de condensation, la zone d'évaporation étant située entre celles-ci. Cette zone se trouve alors à l'intérieur du rotor.

La figure 11B illustre une possibilité d'augmenter la capacité de refroidissement du dispositif selon la figure 11A, en disposant sur les extrémités libres 78 des caloducs 76, qui constituent des zones de condensation, des pales 80 de configuration appropriée, qui pourraient constituer une deuxième série de pâles sur le ventilateur. Ce qui permettrait de bénéficier alors des avantages des ventilateurs à deux séries de pales tel que décrit dans la demande de brevet français FR A 2 811 556. La pale pourrait être une pièce rapportée sur le caloduc ou la zone de condensation 78 pourrait être configurée de façon à former une pale.

Les figures 12A et 12B illustrent une autre utilisation avantageuse du principe de refroidissement par caloduc, selon l'invention, pour le refroidissement du rotor d'une machine électrique tournante, tel que le rotor à pôles saillants et logements précité. Ces figures montrent deux possibilités de refroidir le rotor par disposition de caloducs 82, 84 dans les fonds 86 des encoches 88 de réception des bobinages du rotor, les dites encoches délimitant les pôles saillants (non référencés) en forme de bras à tête de retenue. On constate que les fonds 86 des encoches sont à cette fin configurés de façon à pouvoir recevoir les caloducs qui s'étendent parallèlement à l'axe du rotor. Le caloduc pourrait aussi être incliné pour assurer un retour par force centrifuge. Dans le cas de la figure 12A, chaque caloduc 82 est configuré de façon à remplir pratiquement tout le fond 86 de l'encoche. La forme du caloduc est alors adaptée à la forme des fonds d'encoche 86. Dans le cas de la figure 12B, les caloducs présentent une section transversale circulaire et sont, comme d'ailleurs aussi les caloducs 82 disposés dans le fond 86 en dessous de la zone réservée à la réception du bobinage d'excitation.

La figure 13 illustre une autre possibilité de refroidissement du rotor en disposant des caloducs 90 dans des découpes axiales, de forme avantageusement rectangulaire, qui s'étendent radialement à partir des orifices 89 prévues pour le passage des tirants pour le maintien du paquet de tôles du rotor. La figure rappelle aussi par la référence 91 que des caloducs peuvent être disposés à tout endroit approprié du rotor, radialement et axialement, comme l'indique déjà la figure 11A.

La figure 14 illustre, schématiquement, un caloduc 92 qui sert à la fois de tirant pour le maintien du paquet de tôles, indiqué schématiquement en 94, et de refroidisseur. L'enceinte du caloduc est à cette fin formée par une paroi tubulaire 94, en un matériau résistant tel que du fer. La face intérieure de la paroi tubulaire 94 présente une structure capillaire obtenue par exemple par rainurage. Le fluide caloporteur à l'intérieur de l'enceinte est bien entendu adapté aux matériaux du caloduc. A ses deux extrémités, le caloduc comporte un filetage extérieur 95. Les parties filetées débouchent de chaque côté du paquet de tôle 93 dans un flasque par exemple en aluminium 96, constituant une pièce de maintien précitée et sont fixées dans ceux-ci par des écrous 97 qui coopèrent avec les filetages 95.

Bien entendu on pourrait prévoir un caloduc n'importe où dans le rotor, orienté axialement ou incliné par rapport à l'axe du rotor, ou même radialement, comme il sera expliqué plus loin.

Les figures 15A et 15B illustrent une autre application avantageuse selon l'invention à une machine électrique tournante dont le bobinage du stator est formé par des éléments électriquement conducteurs en forme d'épingles telles que représentées sur les figures. En configurant au moins certaines des épingles 98 en caloducs, l'invention propose une possibilité de refroidissement très efficace du stator en assurant le refroidissement direct d'au moins certaines épingles 98 reçues dans des encoches du corps du stator. La forme tubulaire des épingles configurées en caloduc n'exige pas une augmentation de la section transversale des épingles dans la mesure où le refroidissement procure une diminution de la résistance électrique qui compense la diminution de la section transversale due au caractère tubulaire, des épingles.

Ces épingles 98 électriquement conductrices peuvent être de section circulaire ou rectangulaire ou autre et peuvent être montées à la places d'épingles du type de celles décrites dans le document WO 02/50976 auquel on se reportera pour plus de précisions.

En variantes les caloducs, en forme de barres, remplacent des éléments conducteurs du type de ceux de la figure 11 du document EP 0 881 752 ou du type de ceux décrits dans le document US A 2 407 935, les encoches réalisées dans le corps du stator pour le montage des éléments électriquement conducteurs étant radialement de forme oblongue et semi-fermées comme visible dans ces documents. En variante les encoches sont fermées ou ouvertes en étant refermées ultérieurement.

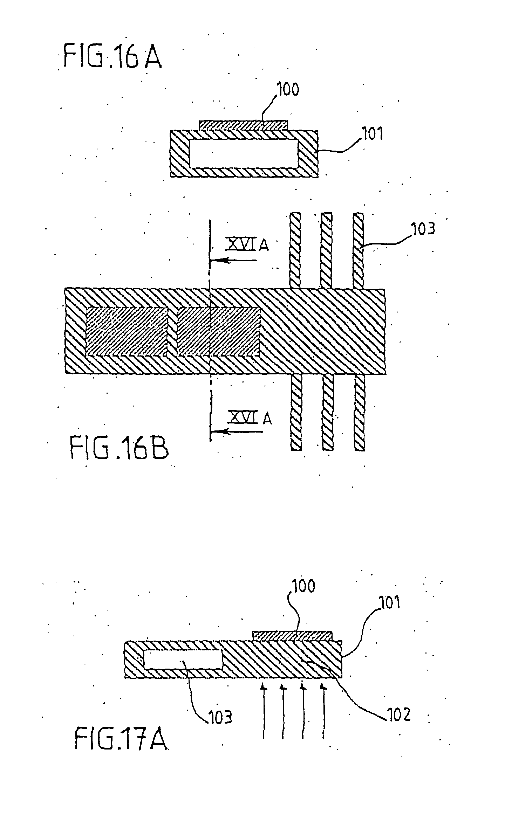

Les figures 16A et 16B illustrent une possibilité de réalisation d'un dispositif de refroidissement par caloduc selon l'invention, qui est particulièrement adapté à des éléments dissipants, tels que des éléments électroniques redresseurs du courant engendrés dans les bobinages du stator, par exemple du type transistor MOSFET, et de composants électroniques servant pour l'électronique de puissance placée à l'arrière de la machine. Ces différentes versions de réalisation des dispositifs de refroidissement peuvent être utilisés dans des conceptions représentées sur les figures 6 à 8.

La figure 16A est une vue en coupe selon la ligne XVIA-XVIA de la figure 16B de l'empilage électronique constituée d'un élément électronique redresseur et dissipant du type MOSFET brasé sur un caloduc 101 qui joue alors le rôle d'un support mécanique et électrique en laissant passer les courants nécessaires au fonctionnement de l'électronique. De plus, il joue le rôle de dissipateur thermique car la puissance calorifique dissipée par l'élément 100 (un transistor du type MOSFET, une puce électronique ou autre) est transférée via le caloduc vers la zone froide du caloduc située avantageusement dans un environnement de convection forcée tel que l'écoulement d'air au-dessus des ouvertures d'aspiration 12 du palier arrière 6 selon la figure 1. Comme sur les figures 6 à 8, des ailettes de dissipation 103 sont placées parallèlement au sens de l'écoulement de l'air de refroidissement afin de diminuer les pertes de charge. L'avantage de ce dispositif d'élément dissipant 100 directement sur les caloducs réside dans la diminution des interfaces thermiques et donc dans une amélioration du refroidissement. Bien entendu le caloduc 101 ainsi que les ailettes 103 peuvent avoir n'importe quelle forme.

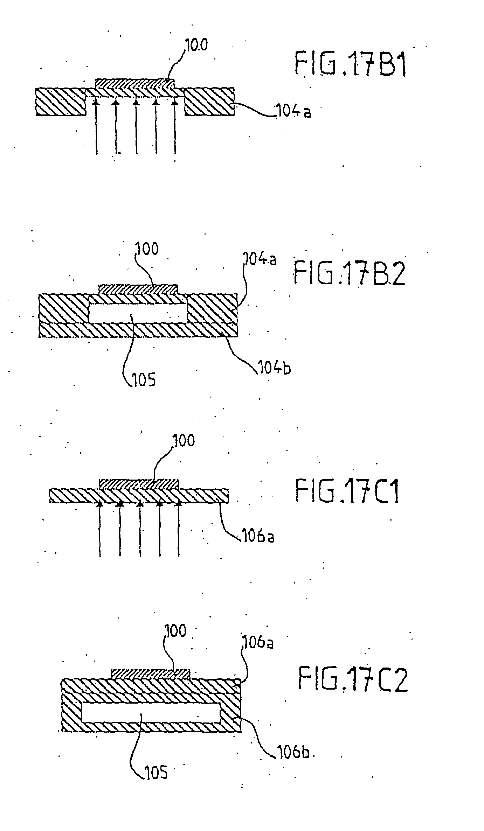

Les figures 17A à 17C illustrent trois solutions permettant un brasage des composants électroniques directement sur le caloduc avec une technique de type laser. Il est à noter que pour ces trois solutions on ne décrit que la zone d'évaporation du caloduc, c'est-à-dire la zone de source chaude. La zone de source froide, c'est-à-dire de condensation du caloduc pourrait être la même que sur la figure 16B.

La solution représentée sur la figure 17A montre un caloduc 101 comportant une partie pleine 102 et, à côté de celle-ci, une partie creuse occupée par le canal 103 d'écoulement du fluide caloporteur. L'élément électronique redresseur, tel qu'une puce 100 ou une diode, peut être brasé par la technique laser sans problème sur la partie pleine 102 du caloduc. Les flèches indiquent les rayons laser.

Selon la solution illustrée sur les figues 17B1, 17B2, le caloduc est réalisé par assemblage de deux pièces séparées 104a et 104b, à savoir une première pièce 104a présentant une épaisseur moins importante dans sa partie médiane sur laquelle on brasera alors par la technique de type laser la puce 100, et une pièce 104b en forme d'une contre-plaque que l'on place après le brasage sous la pièce 104a. Après l'assemblage les deux pièces délimitent un canal interne 105 qui est hermétiquement fermé sauf à un endroit préalablement choisi. Par l'interstice ainsi laissé on injecte le fluide caloporteur mis sous pression dans le canal 105. Puis on ferme l'interstice. Pour assurer le retour du fluide caloporteur de la zone de condensation à la zone d'absorption, on prévoit dans la face interne des deux pièces, qui délimite le canal 105, des moyens formant un réseau capillaire, par exemple par rainurage.

La solution illustrée par les figures 17C1 et 17C2 est également basée sur l'assemblage de deux pièces séparées pour la formation du support caloduc, à savoir une première pièce 106a en forme d'une plaque et une seconde pièce 106b tubulaire à section transversale rectangulaire dans l'exemple représenté. L'intérieur de la pièce 106b constitue le canal 105 de circulation du fluide caloporteur. Dans un premier temps on brase la puce 100 avec la technique laser sur la plaque 106a puis on fixe la plaque 106a porteuse de la puce 100 sur la pièce tubulaire 106b, directement par brasage de sorte à assurer un bon contact thermique. Dans le cadre d'une simple fixation, on peut avantageusement ajouter une graisse thermiquement conductrice entre la plaque 106a de support de la puce 100 et la pièce 106b formant le caloduc proprement dite, pour assurer un bon échange de chaleur entre les deux pièces.

Bien entendu en variante on remplace les opérations de brasage par des opérations de soudage, avantageusement du type laser, ou de collage, la colle étant alors électriquement conductrice. On obtient ainsi dans tous les cas un meilleur transfert de chaleur entre l'élément électronique redresseur et son support mécanique et électrique, tel que le caloduc ou en variante une plaque dissipatrice de chaleur.

Ci-avant différents modes de réalisation d'un dispositif de refroidissement par caloduc, applicable à une machine électrique tournante ont été décrites. Bien entendu, ces modes de réalisation n'ont été donnés qu'à titre d'exemple pour mettre en lumière les avantages que procure l'invention. D'autres possibilités d'application sont envisageables sans sortir du cadre de l'invention. Ainsi, on pourrait placer autour du palier 4 de la machine un caloduc en forme d'une plaque.

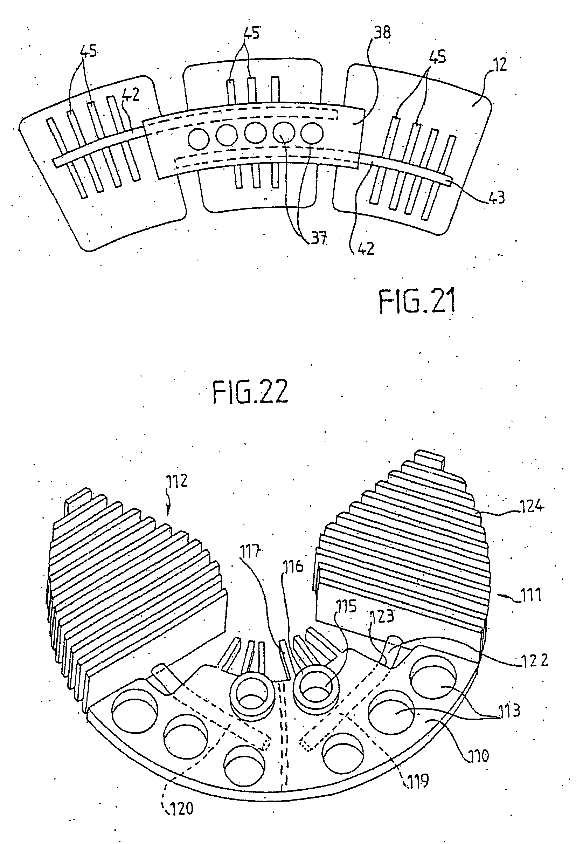

D'autres possibilités de mise en oeuvre de l'invention sont envisageables, telles que celles, par exemple illustrées sur les figures 21 à 27.

La figure 21 montre une autre version de mise en oeuvre d'un pont redresseur, c'est-à-dire du dispositif de redressement, réalisé suivant le principe illustré sur les figures 6A à 6C. La version selon la figure 21 est parfaitement adaptée à un palier comportant des ouvertures axiales 12 arrangées suivant un arc de cercle. Le support de diodes noté toujours 38 est formé par une plaque arquée en un matériau thermiquement conducteur, qui porte cinq diodes 37 et est disposé en partie, comme dans les figures 6c et 7A, au-dessus d'une ouverture 12 tandis que les deux caloducs 42 de forme également arquée s'étendent, ainsi que la plaque 38, jusqu'au dessus des deux ouvertures axiales 12 adjacentes. Chaque extrémité libre 43 constituant une zone de condensation porte une pluralité d'ailettes 45 qui s'inscrivent parfaitement dans les contours des ouvertures 12. La

La figure 22 est une vue en perspective d'un mode de réalisation concrète d'un dissipateur porteur des diodes positives, appartenant au dispositif de redressement réalisé selon l'invention et destiné à équiper un pont redresseur du type représenté sur les figures 2 à 4 en occupant par exemple la zone hachurée de la figure 4 au-dessus des orifices axiaux 12. Le dissipateur selon la figure 22 comporte, comme organe de support des diodes une plaque en forme d'un arc de cercle désignée par la référence 110 et, de part et d'autre de cette plaque, des dispositifs à ailettes 111, 112. La plaque de support 110 et les ailettes s'étendent au moins au dessus d'une ouverture 12. La plaque 110 comporte, répartis le long de sa périphérie extérieure, six emplacements d'implantation de diodes, qui sont réalisés, dans l'exemple représenté, sous forme de trous 113 d'insertion de diodes par emmanchement. La plaque de support 110 comporte, près de sa périphérie interne deux emplacements pour la fixation du dissipateur sur le palier arrière de la machine. Ces emplacements comportent chacun un trou 115 de passage d'une colonne de fixation et, en saillie de la face supérieure de la plaque, un embout tubulaire 116. Le bord périphérique interne porte six ailettes de refroidissement 117 qui s'étendent radialement vers l'axe de la machine.

Dans la plaque de support 110 sont insérés deux caloducs 119, 120 qui s'étendent chacun entre trois emplacements d'implantation de diodes 113 et un emplacement de fixation 115. La partie de chaque caloduc 119 et 120, qui est engagée dans la plaque 110, est sensiblement rectiligne en s'étendant de façon générale dans la direction longitudinale de la plaque. Cette partie interne constitue la zone d'évaporation du caloduc. La partie interne se prolonge à l'extérieur par une partie externe 122 sensiblement rectiligne dans l'exemple représenté et qui constitue la zone de condensation du caloduc. Chaque zone extérieure 122 porte une multitude d'ailettes de refroidissement parallèles 124 qui constituent le dispositif de refroidissement 111 et 112. L'ensemble formé par les ailettes 124 présente une forme approximativement triangulaire dont la largeur diminue dans la direction d'éloignement de la plaque de support des diodes 110 tout en étant courbée au niveau de sa périphérie extérieure de la manière correspondant au palier arrière sur lequel le dissipateur de la figure 22 est fixé. Grâce à cette configuration du dissipateur, celui-ci peut s'inscrire dans le contour de la zone hachurée de la figure 4.

La plaque de support 110, constituant un organe de support, est ici métallique en étant en aluminium.

Il est encore à noter que chaque caloduc comporte une zone de coude 123 entre ses deux parties rectilignes constituant des zones d'évaporation et de condensation.

Il est à noter que les trous d'implantation 113 des diodes et des trous 115 de passage des colonnettes de fixation peuvent être disposées différemment. Ainsi on pourrait implanter deux diodes aux endroits prévus pour les colonnettes de fixation, pour ces colonnettes étant alors réservés deux trous d'implantation de diodes pour la fixation du dissipateur sur le palier arrière.

Bien entendu en variante, comme visible en pointillés, la plaque est scindée en deux partie distinctes chaque partie portant respectivement les diodes positives et les diodes négatives. On peut faire de même à la figure 21.

La figure 23 illustre, schématiquement un certain nombre de possibilités d'utilisation du principe de refroidissement par caloduc, supplémentairement aux exemples déjà décrits.

La figure 23 est une vue en coupe axiale d'une machine électrique tournante telle que représentée sur la figure 10A, mais qui montre, supplémentairement, fixée sur l'extrémité de l'arbre de rotor 2 une poulie connue en soi notée 126 et destinée soit à entraîner en rotation l'arbre 2, par exemple en acier, soit à entraîner un moteur thermique par exemple par l'intermédiaire d'une transmission à courroie. Une particularité de la machine selon la figure 23 réside dans le fait que l'arbre 2 est creux et configuré pour constituer un caloduc dont la zone d'évaporation est axialement située dans le rotor tandis que la partie extérieure 128 constitue la zone de condensation du caloduc. Cette zone extérieure au bout de laquelle est fixée la poulie 126 porte, entre cette dernière et le roulement 14, une pluralité d'ailettes de refroidissement radial 129. Comme cela est indiqué en traits mixtes, on pourrait également prévoir sur la partie extérieure 128 de l'arbre 2 une roue de ventilateur, le cas échéant à pales, 130. Le ventilateur 130 assure ou améliore l'écoulement du fluide de refroidissement au niveau du palier avant, indiqué par la ligne fléchée en traits interrompus. On pourrait également prévoir, dans ce cas, l'utilisation d'ailettes de refroidissement s'étendant parallèlement à l'axe de l'arbre 2.

L'arbre 2 pourrait être de nature tubulaire à épaisseur constante en un matériau approprié tel que de l'acier. On pourrait aussi faire en sorte que l'espace interne 132 de l'arbre présente la forme indiquée en traits interrompus. On constate que l'espace 132 se rétrécit dans la direction radiale de l'arbre en direction de la zone de condensation 128. L'inclinaison de la face 133 qui délimite l'espace interne 132 facilite ainsi un retour du fluide caloporteur à l'état de condensat, par les forces centrifuges provoquées par la rotation de l'arbre 2.

La figure 23 montre encore un dispositif caloduc 134 qui est inséré dans le rotor 1 et est incliné par rapport à l'axe de la machine pour assurer le retour du fluide caloporteur à l'état de condensat à la zone d'évaporation sous l'effet des forces centrifuges. A cette fin, la zone d'évaporation notée 135 est radialement plus éloignée de l'axe de la machine que la zone de condensation à l'extérieur du rotor. Dans l'exemple représenté, le dispositif caloduc est du type représenté sur la figure 20, c'est-à-dire comporte une zone d'évaporation 135 disposée axialement au milieu du rotor et deux zones extérieures de condensation 136, une à chaque extrémité du rotor. Comme le montre également la figure 23, chaque zone de condensation 136 du caloduc est engagée dans un flasque 137 avantageusement en aluminium qui recouvre la face d'extrémité frontale du rotor 1. Le flasque 137 peut porter le ventilateur destiné à créer l'écoulement du fluide de refroidissement indiqué par la ligne flèche interrompue. Le ventilateur pourrait être réalisé sous forme d'une pièce séparée ou, comme dans l'exemple représenté, constituer un ensemble avec le flasque moulé avec ses pales 138 sur celui-ci.

La figure 24 illustre aussi la possibilité de refroidir le rotor en prévoyant dans celui-ci des caloducs 140 orientés radialement, la zone d'évaporation 141 se trouvant à l'intérieur du rotor 1 et la zone de condensation 142 se trouvant à la périphérie externe du rotor 1 dans l'entrefer 143. Pour assurer un refroidissement efficace, on peut réaliser la zone de condensation d'un caloduc 140 sous forme d'un élément creux de forme tubulaire 144 s'étendant sur la plus grande partie de la périphérie du rotor, symétriquement par rapport au corps du caloduc 140, dans la direction périphérique, comme on le voit sur la figure 24, ou sous forme d'une chemise telle qu'indiquée en traits interrompus sur la figure 23 et référencée 145, qui entoure le rotor.

La figure 23 illustre encore la possibilité de prévoir dans le corps, en forme de paquet de tôle, du stator 3, ou directement dans les encoches dudit corps servant de logement des bobinages 3' du stator 3, des caloducs axiaux que l'on voit sur la figure sortir en 147 aux deux extrémités du stator. Ces caloducs sont implantés dans le corps du stator avantageusement au niveau du fond des encoches par exemple du type semi fermé.

Ces caloducs pourraient être répartis uniformément autour du stator et être prévus radialement aux niveaux intérieur et extérieur, c'est-à-dire radialement de part et d'autre du bobinage de stator 3'. En variante la zone de condensation du caloduc 147 s'étend au niveau des ouies radiales de refoulement d'air que présentent le carter 4, plus précisément les paliers avant et arrière de celui-ci de manière précitée. Dans cette figure les ouies non pas été référencées par simplicité.

Les figures 25 à 27 illustrent un certain nombre d'autres possibilités de refroidissement du stator, rendues possibles par l'utilisation d'un dispositif de refroidissement par caloduc supplémentaire.

Tout d'abord on pourrait prévoir autour de la partie périphérique externe du carter 4 (entre les paliers avant et arrières), le cas échéant en remplacement des ailettes 70 de la figure 10A, une poche d'eau, qui pourrait être réalisée en disposant autour du palier, à une certaine distance radiale de celui-ci, une chemise 148, en obtenant ainsi un espace annulaire 149 entre le palier 4 et la chemise 148 dans laquelle on fait circuler de l'eau de refroidissement. Pour améliorer l'effet de refroidissement on pourrait utiliser des caloducs radiaux tels que désignés par la référence 151, dont la zone d'évaporation pourrait se trouver à l'intérieur du paquet de tôle 3 du stator, comme par exemple indiqué en 152 ou seulement dans le palier 4, et dont la zone de condensation 154 s'étend dans l'espace annulaire 149 avantageusement parcouru par de l'eau de refroidissement. Bien entendu, les caloducs pourraient aussi sortir directement dans l'air environnant dans une version de machine sans poche d'eau. La figure 26 montre qu'un caloduc radial 151 pourrait être réalisé sous forme d'une tige 156 filetée ou non qui peut s'étendre radialement jusqu'à dans le paquet de tôle de stator 3 et dont l'autre extrémité 157, le cas échéant en forme d'une tête de vis, est disposée dans l'espace annulaire 149 parcouru par l'eau de refroidissement et donc en contact avec cette eau. La figure 26 illustre encore la possibilité que le caloduc pourrait s'étendre jusqu'à dans l'encoche 159 de réception des conducteurs non représentés de l'enroulement stator 3'. On pourrait aussi ou en plus prévoir au fond de l'encoche 159 un caloduc axial 160. La figure 27 a pour but de démontrer que l'extrémité 157 de condensation, le cas échéant réalisée sous forme de tête de vis 157 pourrait être configurée de façon à provoquer une turbulence de l'écoulement d'eau de refroidissement, qui améliore encore le transfert de la chaleur dissipée par les zones de condensation, à l'eau de refroidissement.

Bien entendu on pourrait encore prévoir d'autres possibilités et variantes de mise en oeuvre du principe de refroidissement par caloduc. Il va en outre de soi que des différentes applications de ce principe de refroidissement par caloduc, qui ont été décrits ci avant et sont représentés sur les figures pourraient être utilisés séparément ou en combinaison les unes avec les autres.

L'invention est applicable bien entendu, de manière précitée, à une machine réversible, dite alterno-démarreur, fonctionnant réalisant la fonction de démarreur et d'alternateur comme décrit par exemple dans le document WO 01/69762 auquel on pourra se reporter pour plus de précisions, les figures 1, 3 et 4 de ce document montrant la structure d'un rotor à griffes conventionnel.

L'alternateur est en variante du type monophasé et comporte donc un seul bobinage de stator.

Les caloducs peuvent être montés dans les paliers avant ou arrière de la figure 1 pour bien refroidir les roulements à billes de montage de l'arbre 2 comme dans le mode de réalisation de la figure 23 permettant également de bien refroidir le ou les bobinages d'excitation.

D'une manière générale grâce à l'invention on peut augmenter la puissance du ou des bobinages du rotor et du stator.

En variante , comme visible à la figure 28, la plaque 110 de la figure 22 porte la borne B+, destinée à être reliée électriquement à la borne positive de la batterie et au réseau de bord du véhicule. Cette borne est venue ici de moulage avec la plaque 110 ici à base d'aluminium. Cette borne 601 correspond à la borne 600 de la figure 2. La borne 601 peut être dotée d'un filetage.

En variante la plaque 110 porte la borne, dite B-, destinée à être reliée à la masse.

En variante c'est le caloduc lui-même qui porte l'une de ces bornes B+, B-.

Dans les figures il est prévu au moins un ventilateur interne 7,8 monté dans le carter 4 et solidaire de l'une des extrémités axiale du rotor.

En variante il est prévu de manière connue un ventilateur externe au carter 4 et implanté au voisinage de la poulie de l'alternateur. Les passages sont constitués alors par les ouvertures 12 des paliers 5, 6.

En variante le ventilateur est indépendant de l'arbre et du rotor. Ce ventilateur est entraîné par un moteur électrique comme décrit dans le document FR A 2 515 893. Avantageusement le moteur électrique est implanté alors au voisinage ou dans l'alternateur.

## Revendications

1. Machine électrique tournante comprenant, un carter (4) pourvu d'au moins un palier avant (5) et d'un palier arrière (6) et à l'intérieur du carter un stator (3) porteur d'au moins un bobinage de stator, un arbre (2), un rotor (1) monté rotatif à l'intérieur du stator à l'aide de l'arbre (2) supporté dans lesdits paliers avant et arrière, un dispositif de redressement pourvu d'éléments électroniques redresseurs (37,59,100) du courant engendré dans le bobinage du stator, ainsi des moyens de refroidissement et d'évacuation vers l'extérieur de la chaleur produite dans la machine, lesdits moyens de refroidissement et d'évacuation comprenant un fluide caloporteur et au moins un caloduc qui comporte une enceinte (29) fermée dans laquelle circule le fluide caloporteur susceptible d'absorber de la chaleur de l'environnement, par un premier changement d'état, et de restituer à l'environnement la chaleur, lors d'un autre changement d'état, le dit caloduc appartenant au dispositif de redressement et comprenant au moins une zone (30) d'absorption de la chaleur par évaporation du fluide caloporteur et au moins une zone (32) de restitution de la chaleur absorbée par condensation du fluide caloporteur, dite zone de condensation, **caractérisé en ce qu'**elle comporte au moins un ventilateur (7)solidaire du rotor (1), **en ce que** le carter (4) comporte des passages (12,13) consistant en des ouvertures axiales du palier arrière (6) pour passage d'un fluide de refroidissement, tel que de l'air, par écoulement forcé du fluide de refroidissement à l'aide du ventilateur (7) et **en ce que** la zone de condensation (32) du caloduc se trouve dans l'écoulement du fluide de refroidissement au moins en partie au-dessus d'une des dites ouvertures axiales (12).

2. Machine selon la revendication 1, **caractérisée en ce que** le ventilateur comporte deux séries de pales (604, 605).

3. Machine selon la revendication 2, **caractérisée en ce qu'**au moins une pale d'au moins l'une des séries de pales consiste en un caloduc.

4. Machine selon l'une quelconque des revendications précédentes, **caractérisée en ce que** la zone de condensation (32) présente au moins une saillie de dissipation de la chaleur (45, 53, 58,66..), telle qu'un ailette ou un plot, en regard du passage (12, 13), qui est implantée dans l'écoulement du fluide de refroidissement s'écoulant à travers l'une des dites parties axiales.

5. Machine selon l'une quelconque des revendications précédentes, **caractérisée en ce que** l'enceinte (29,..) du caloduc a la forme d'un tube.

6. Machine selon l'une quelconque des revendications 1 à 4, **caractérisée en ce que** l'enceinte (29,..) du caloduc a la forme d'une plaque.

7. Machine selon l'une quelconque des revendications précédentes, **caractérisé en ce que** les éléments électroniques redresseurs du courant engendré dans le bobinage du stator sont montés sur des moyens de support en un matériau thermiquement conducteur, et **en ce qu'**au moins un caloduc (42, 49, 55, 64..) s'étend entre la zone d'implantation d'un élément électronique redresseur (37, 59), pour pouvoir absorber la chaleur produite par celui-ci, et sa zone de condensation (32) qui s'étend jusque dans ledit écoulement du fluide de refroidissement consistant en de l'air.

8. Machine selon la revendication 7, **caractérisée en ce que** le support d'au moins un élément électronique redresseur comporte un creux ou un trou dans lequel est disposée la zone d'évaporation d'un caloduc.

9. Machine selon la revendication 8, **caractérisée en ce qu'**il est prévu une pluralités d'éléments de supports d'un élément électronique redresseur (37) comportant chacun un perçage (47) destiné au passage de la zone d'évaporation d'un caloduc (49) et **en ce que** le caloduc (49) forme un ensemble s'étendant à travers tous les éléments de support (38) et passant au dessus des ouvertures axiales (12) du palier arrière (6) pour former des zones de condensation.

10. Machine selon la revendication 8, **caractérisée en ce que** le support d'au moins un élément électronique redresseur comporte des creux ou des trous dans lequel sont insérés deux caloducs (42) qui s'étendent dans des directions opposées jusqu'au dessus es ouvertures axiales adjacentes (12) du palier arrière (6).

11. Machine selon l'une quelconque des revendications 1 à 6, **caractérisée en ce que** le support (38) d'au moins un élément électronique redresseur est monté sur la zone d'évaporation d'un caloduc (49) réalisée de façon à former un organe de support mécanique.

12. Machine selon la revendication 11, **caractérisée en ce que** le caloduc porte une borne (B+,B-) destinée à être reliée à la borne positive d'une batterie ou à la masse.

13. Machine selon l'une quelconque des revendications précédentes, **caractérisée en ce qu'**elle comporte des moyens de refroidissement du stator comprenant au moins un caloduc (68) disposé dans le carter (4), en s'étendant parallèlement à l'axe du stator.

14. Machine selon la revendication 13, **caractérisée en ce que** les paliers avant et arrières sont dotées à leur périphérie externe d'ouïes pour l'écoulement du fluide de refroidissement et **en ce qu'**au moins un caloduc (68) est inséré dans le carter (4) et s'étend jusqu'à dans une ouïe radiale (13), la partie du caloduc se trouvant dans l'ouïe constituant une zone de condensation (74).

15. Machine selon l'une quelconque des revendications précédentes, **caractérisée en ce qu'**au moins un caloduc (76) est axialement inséré dans le rotor (1) de la machine et s'étend par au moins une extrémité (78) vers l'extérieur du rotor, cette extrémité constituant une zone de condensation du caloduc et **en ce que** cette extrémité est pourvue d'une pale de ventilateur (80).

16. Machine selon l'une quelconque des revendications précédentes, **caractérisée en ce que** le stator présente un corps doté d'encoches et **en ce qu'**un caloduc (160) est disposé dans au moins une encoche du corps du stator.

17. Machine selon la revendication 16, **caractérisé en ce que** le stator comporte au moins un bobinage de stator formé par des conducteurs en forme d'épingles disposées dans les encoches du corps du stator et **en ce qu'**au moins certaines épingles (98) sont réalisées sous forme de caloducs.

18. Machine selon l'une quelconque des revendications précédentes, **caractérisée en ce que** l'arbre (2) du rotor (1) est réalisé sous forme d'un caloduc.

## Claims

1. Rotary electrical machine comprising a housing (4) which is provided with at least a front bearing (5) and a rear bearing (6), and, inside the housing, a stator (3) which bears at least one stator winding, a shaft (2), a rotor (1) which is fitted such as to rotate in the interior of the stator by means of the shaft (2) which is supported in the said front and rear bearings, a rectifier device which is provided with electronic rectifier elements (37, 59, 100) for the current which is generated in the stator winding, as well as means for cooling and discharge towards the exterior of the heat which is produced in the machine, the said cooling and discharge means comprising a heat-exchanging fluid and at least one heat pipe which comprises a closed enclosure (29) in which there circulates the heat-exchanging fluid which can absorb the heat from the environment, by means of a first change of state, and can return the heat to the environment during another change of state, the said heat pipe belonging to the rectifier device, and comprising at least one area (30) of absorption of the heat by evaporation of the heat-exchanging fluid and at least one area (32) for restitution of the heat which is absorbed by condensation of the heat-exchanging fluid, known as the condensation area, **characterised in that** it comprises at least one fan (7) which integral with the rotor (1), **in that** the housing (4) comprises passages (12, 13) consisting of axial openings in the rear bearing (6) for passage of a cooling fluid, such as air, by forced flow of the cooling fluid by means of the fan (7), and **in that** the condensation area (32) of the heat pipe is in the flow of the cooling fluid, at least in the part above one of the said axial openings (12).

2. Machine according to claim 1, **characterised in that** the fan comprises two series of blades (604, 605).

3. Machine according to claim 2, **characterised in that** at least one blade of at least one of the series of blades consists of a heat pipe.

4. Machine according to any one of the preceding claims, **characterised in that** the condensation area (32) has at least one projection (45, 53, 58, 66..) for dissipation of the heat, such as a fin or a stud, opposite the passage (12, 13), which is implanted in the flow of the cooling fluid which flows through one of the said axial parts.

5. Machine according to any one of the preceding claims, **characterised in that** the enclosure (29, ..) of the heat pipe is in the form of a tube.

6. Machine according to any one claims 1 to 4, **characterised in that** the enclosure (29, ..) of the heat pipe is in the form of a plate.

7. Machine according to any one of the preceding claims, **characterised in that** the electronic elements to rectify the current which is generated in the stator winding are fitted on support means made of a thermally conductive material, and **in that** at least one heat pipe (42, 49, 55, 64..) extends between the area of implantation of an electronic rectifier element (37, 59), in order to be able to absorb the heat produced by the latter, and its condensation area (32), which extends as far as into the said flow of the cooling fluid which consists of air.

8. Machine according to claim 7, **characterised in that** the support for at least one electronic rectifier element comprises a hollow or a hole in which the evaporation area of a heat pipe is disposed.

9. Machine according to claim 8, **characterised in that** a plurality of support elements are provided for an electronic rectifier element (37), each comprising a bore (47) which is designed for the passage of the evaporation area of a heat pipe (49), and **in that** the heat pipe (49) forms an assembly which extends through all the support elements (38) and passes above the axial openings (12) in the rear bearing (6), in order to form condensation areas.

10. Machine according to claim 8, **characterised in that** the support for at least one electronic rectifier element comprises hollows or holes, in which there are inserted two heat pipes (42) which extend in opposite directions, as far as above adjacent axial openings (12) in the rear bearing (6).

11. Machine according to any one of claims 1 to 6, **characterised in that** the support (38) for at least one electronic rectifier element is fitted on the area of evaporation of a heat pipe (49), which area is produced such as to form a mechanical support unit.

12. Machine according to claim 11, **characterised in that** the heat pipe bears a terminal (B+, B-) which is designed to be connected to the positive terminal of a battery or to the earth.

13. Machine according to any one of the preceding claims, **characterised in that** it comprises means for cooling the stator, comprising at least one heat pipe (68) which is disposed in the housing (4), and extends parallel to the axis of the stator.

14. Machine according to claim 13, **characterised in that** the front and rear bearings are provided on their outer periphery with inlets for the flow of the cooling fluid, and **in that** at least one heat pipe (68) is inserted in the housing (4) and extends as far as into a radial inlet (13), the part of the heat pipe which is in the inlet constituting a condensation area (74).

15. Machine according to any one of the preceding claims, **characterised in that** at least one heat pipe (76) is inserted axially in the rotor (1) of the machine, and extends at one end (78) at least towards the exterior of the rotor, this end constituting a condensation area of the heat pipe, and **in that** this end is provided with a fan blade (80).

16. Machine according to any one of the preceding claims, **characterised in that** the stator has a body which is provided with notches, and **in that** a heat pipe (160) is disposed in at least one notch in the stator body.

17. Machine according to claim 16, **characterised in that** the stator comprises at least one stator winding which is formed by conductors in the form of pins which are disposed in the notches in the stator body, and **in that** at least some pins (98) are produced in the form of heat pipes.

18. Machine according to any one of the preceding claims, **characterised in that** the shaft (2) of the rotor (1) is produced in the form of a heat pipe.

## Patentansprüche

1. Drehende elektrische Maschine, die ein Gehäuse (4) umfasst, das mit mindestens einem vorderen Lager (5) und einem hinteren Lager (6) versehen ist, sowie im Inneren des Gehäuses einen Stator (3), auf dem mindestens eine Statorwicklung sitzt, eine Welle (2), einen Rotor (1), der mittels der Welle (2), die von dem besagten vorderen und hinteren Lager getragen wird, drehend im Inneren des Stators eingebaut ist, eine Gleichrichtervorrichtung, die mit elektronischen Elementen (37, 59, 100) zum Gleichrichten des in der Statorwicklung erzeugten Stroms ausgestattet ist, und Mittel zum Kühlen und zum Ableiten der in der Maschine erzeugten Wärme nach außen, wobei die besagten Mittel zum Kühlen und zum Ableiten einen Wärmeträger und mindestens ein Wärmerohr umfassen, das eine geschlossene Kammer (29) umfasst, in der der Wärmeträger zirkuliert, der durch einen ersten Zustandswechsel Umgebungswärme absorbieren und durch einen weiteren Zustandswechsel die Wärme wieder an die Umgebung abgeben kann, wobei das besagte Wärmerohr zu der Gleichrichtervorrichtung gehört und mindestens einen Bereich (30) zum Absorbieren der Wärme durch Verdampfen des Wärmeträgers und mindestens einen Bereich (32) zur Abgabe der absorbierten Wärme durch Kondensation des Wärmeträgers umfasst, der Kondensationsbereich genannt wird, **dadurch gekennzeichnet, dass** sie mindestens einen Lüfter (7) umfasst, der fest mit dem Rotor (1) verbunden ist, **dass** das Gehäuse (4) Durchgänge (12, 13) umfasst, die aus axialen Öffnungen des hinteren Lagers (6) bestehen, für den Durchgang eines Kühlmittels wie Luft durch mittels des Lüfters (7) erzwungene Strömung des Kühlmittels, **und dass** sich der Kondensationsbereich (32) des Wärmerohres im Kühlmittelstrom zumindest teilweise über einer der besagten axialen Öffnungen (12) befindet.

2. Maschine nach Anspruch 1, **dadurch gekennzeichnet, dass** der Lüfter zwei Schaufelreihen (604, 605) umfasst.

3. Maschine nach Anspruch 2, **dadurch gekennzeichnet, dass** mindestens eine Schaufel mindestens einer der Schaufelreihen aus einem Wärmerohr besteht.

4. Maschine nach einem der vorhergehenden Ansprüche, **dadurch gekennzeichnet, dass** der Kondensationsbereich (32) mindestens eine Auskragung zur Wärmeableitung (45, 53, 58, 66 ...), wie einen Flügel oder einen Klotz, gegenüber dem Durchgang (12, 13) umfasst, die in dem Kühlmittelstrom angeordnet ist, der durch einen der besagten axialen Bereiche strömt.

5. Maschine nach einem der vorhergehenden Ansprüche, **dadurch gekennzeichnet, dass** die Kammer (29, ...) des Wärmerohres die Form eines Rohres hat.

6. Maschine nach einem der Ansprüche 1 bis 4, **dadurch gekennzeichnet, dass** die Kammer (29, ...) des Wärmerohres die Form einer Platte hat.

7. Maschine nach einem der vorhergehenden Ansprüche, **dadurch gekennzeichnet, dass** die elektronischen Elemente zum Gleichrichten des in der Statorwicklung erzeugten Stroms auf Halterungsmitteln aus einem wärmeleitenden Werkstoff befestigt sind, **und dass** sich mindestens ein Wärmerohr (42, 49, 55, 64) zwischen dem Anordnungsbereich eines elektronischen Gleichrichterelements (37, 59), um die von diesem erzeugte Wärme absorbieren zu können, und seinem Kondensationsbereich (32) erstreckt, der sich bis in den besagten Strom des Kühlmittels erstreckt, das aus Luft besteht.

8. Maschine nach Anspruch 7, **dadurch gekennzeichnet, dass** die Halterung von mindestens einem elektronischen Gleichrichterelement einen Hohlraum oder ein Loch umfasst, worin der Verdampfungsbereich eines Wärmerohres angeordnet ist.

9. Maschine nach Anspruch 8, **dadurch gekennzeichnet, dass** eine Mehrzahl von Halterungselementen für ein elektronisches Gleichrichterelement (37) vorgesehen ist, die jeweils eine Bohrung (47) umfassen, die für den Durchgang des Verdampfungsbereichs eines Wärmerohres (49) bestimmt ist, **und dass** das Wärmerohr (49) ein Ganzes bildet, das sich durch alle Halterungselemente (38) erstreckt und über den axialen Öffnungen (12) des hinteren Lagers (6) verläuft, um Kondensationsbereiche zu bilden.

10. Maschine nach Anspruch 8, **dadurch gekennzeichnet, dass** die Halterung von mindestens einem elektronischen Gleichrichterelement Hohlräume oder Löcher umfasst, in die zwei Wärmerohre (42) eingeführt sind, die sich in entgegengesetzte Richtungen bis über die benachbarten axialen Öffnungen (12) des hinteren Lagers (6) erstrecken.

11. Maschine nach einem der Ansprüche 1 bis 6, **dadurch gekennzeichnet, dass** die Halterung (38) mindestens eines elektronischen Gleichrichterelements auf dem Verdampfungsbereich eines Wärmerohres (49) befestigt ist, der so ausgeführt ist, dass er ein mechanisches Halterungsorgan bildet.

12. Maschine nach Anspruch 11, **dadurch gekennzeichnet, dass** auf dem Wärmerohr eine Klemme (B+, B-) sitzt, die für die Verbindung mit der positiven Klemme einer Batterie oder mit der Masse bestimmt ist.

13. Maschine nach einem der vorhergehenden Ansprüche, **dadurch gekennzeichnet, dass** sie Mittel zum Kühlen des Stators umfasst, die mindestens ein Wärmerohr (68) umfassen, das in dem Gehäuse (4) angeordnet ist, und die sich parallel zur Achse des Stators erstrecken.

14. Maschine nach Anspruch 13, **dadurch gekennzeichnet, dass** das vordere und das hintere Lager an ihrem äußeren Rand mit Einlassöffnungen für den Kühlmittelstrom versehen sind, **und dass** mindestens ein Wärmerohr (68) in das Gehäuse (4) eingeführt ist und sich bis zu einer radialen Einlassöffnung (13) erstreckt, wobei der Teil des Wärmerohres, der sich in der Einlassöffnung befindet, einen Kondensationsbereich (74) bildet.

15. Maschine nach einem der vorhergehenden Ansprüche, **dadurch gekennzeichnet, dass** mindestens ein Wärmerohr (76) axial in den Rotor (1) der Maschine eingeführt ist und sich mit mindestens einem Ende (78) außerhalb des Rotors erstreckt, wobei dieses Ende einen Kondensationsbereich des Wärmerohres bildet, **und dass** dieses Ende mit einer Lüfterschaufel (80) versehen ist.

16. Maschine nach einem der vorhergehenden Ansprüche, **dadurch gekennzeichnet, dass** der Stator einen Körper aufweist, der mit Einkerbungen versehen ist, **und dass** ein Wärmerohr (160) in mindestens einer Einkerbung im Körper des Stators angeordnet ist.

17. Maschine nach Anspruch 16, **dadurch gekennzeichnet, dass** der Stator mindestens eine Statorwicklung umfasst, die aus Leitern gebildet wird, die als Klammern ausgebildet sind, die in den Einkerbungen im Körper des Stators angeordnet sind, **und dass** zumindest bestimmte Klammern (98) als Wärmerohre ausgebildet sind.

18. Maschine nach einem der vorhergehenden Ansprüche, **dadurch gekennzeichnet, dass** die Welle (2) des Rotors (1) als ein Wärmerohr ausgebildet ist.
